# EUROPEAN PATENT APPLICATION

(11) **EP 4 181 231 A1**
(43) Date of publication of application: **17.05.2023**
(21) Application number: 21837989.9
(22) Date of filing: 02.07.2021
(51) Int. Cl.: H01M 4/133, H01M 4/1393, H01M 4/36, H01M 4/587, H01M 4/62, H01M 10/054, H01M 10/0562, H01M 10/0585, H01B 1/06, H01B 1/08

(54) **SINTERED BODY ELECTRODE, BATTERY MEMBER, SINTERED BODY ELECTRODE AND BATTERY MEMBER MANUFACTURING METHODS, SOLID ELECTROLYTE PRECURSOR SOLUTION, SOLID ELECTROLYTE PRECURSOR, AND SOLID ELECTROLYTE**

(30) Priority: 09.07.2020 JP 2020118624; 05.10.2020 JP 2020168411; 02.11.2020 JP 2020183728
(71) Applicant: Nippon Electric Glass Co., Ltd., Otsu-shi, Shiga 520-8639 (JP)
(72) Inventor: TSUNODA, Kei, Otsu-shi, Shiga 520-8639 (JP); TANAKA, Ayumu, Otsu-shi, Shiga 520-8639 (JP); YAMAUCHI, Hideo, Otsu-shi, Shiga 520-8639 (JP)
(74) Representative: Tetzner, Michael
(86) International application number: PCT/JP2021/025210
(87) International publication number: WO 2022/009811

(57) **Abstract**

Provided is a sintered body electrode, a battery member, and sintered body electrode and battery member manufacturing methods all of which can increase the safety and operate a battery at low temperatures. A sintered body electrode 3 according to the present invention contains: a carbon electrode material made of graphite or hard carbon; and an alkali-ion conductive solid electrolyte.

## Description

### [Technical Field]

The present invention relates to sintered body electrodes, battery members using the same, sintered body electrode and battery member manufacturing methods, alkali-ion conductive solid electrolyte precursor solutions, alkali-ion conductive solid electrolyte precursors, and alkali-ion conductive solid electrolytes.

### [Background Art]

Lithium-ion secondary batteries have secured their place as high-capacity and light-weight power sources essential for mobile devices, electric vehicles, and so on. However, current lithium-ion secondary batteries employ as their electrolytes, mainly, combustible organic electrolytic solutions, which raises concerns about the risk of burning or explosion. As a solution to this problem, developments of lithium-ion all-solid-state batteries using a solid electrolyte instead of an organic electrolytic solution have been promoted. However, because, as for lithium, there are concerns about such issues as global rise in raw and processed material costs, studies have recently been conducted on sodium-ion all-solid-state batteries as alternatives to lithium-ion all-solid-state batteries.

Patent Literature 1 below discloses an example of a sodium battery. This sodium battery includes a positive electrode, a negative electrode, and a sulfide-based solid electrolyte. Metal sulfide or sodium metal oxide is used as the positive electrode. Sodium metal or sodium alloy is used as the negative electrode.

### [Citation List]

### [Patent Literature]

[PTL 1]
JP-A-2017-208324

### [Summary of Invention]

### [Technical Problem]

However, the sodium battery as described in Patent Literature 1 has difficulty in sufficiently increasing the safety because the sodium metal used as the negative electrode easily reacts with water.

In addition, many of conventional all-solid-state sodium batteries operate at a relatively high temperature, for example, 60°C or higher and, therefore, have a problem of difficulty in sufficiently operating at low temperatures.

An object of the present invention is to provide a sintered body electrode, a battery member, sintered body electrode and battery member manufacturing methods, a solid electrolyte precursor solution, a solid electrolyte precursor, and a solid electrolyte all of which can increase the safety and operate a battery at low temperatures.

### [Solution to Problem]

A sintered body electrode according to the present invention contains: a carbon electrode material made of graphite or hard carbon; and an alkali-ion conductive solid electrolyte.

The alkali-ion conductive solid electrolyte preferably has a sodium-ion conductivity.

The alkali-ion conductive solid electrolyte is preferably made of an oxide.

Preferably, the sintered body electrode according to the present invention contains a mixture phase of the carbon electrode material and the alkali-ion conductive solid electrolyte and the mixture phase is formed of particles having an average particle diameter of 10 µm or less.

Preferably, the carbon electrode material is a particulate carbon electrode material and the particulate carbon electrode material is coated with a coating layer made of the alkali-ion conductive solid electrolyte.

Preferably, the carbon electrode material is a particulate carbon electrode material and the particulate carbon electrode material is coated with a coating layer made of: a carbon electrode material different from the particulate carbon electrode material; and the alkali-ion conductive solid electrolyte.

Preferably, the alkali-ion conductive solid electrolyte is NASICON crystals and contains at least one of: a first compound represented by a general formula Na₁₊ₓZr₂P₃₋ₓSiₓO₁₂ (0 ≤ x ≤ 3); and a second compound in which a part of the Zr in the first compound is substituted with at least one element selected from the group consisting of Ca, Mg, Ba, Sr, Al, Nb, Ta, In, Ga, and group III elements.

The alkali-ion conductive solid electrolyte preferably contains at least one type of crystals of β-alumina crystals and β"-alumina crystals.

The alkali-ion conductive solid electrolyte preferably contains a crystalline phase represented by a general formula Li₇La₃Zr₂O₁₂, Li₇La₃Zr₂₋ₓMₓO₁₂ (where M represents at least one selected from Nb, Ga, and Ta and 0 < x < 2) or Li₇₋₃ₓAlₓLa₃Zr₂O₁₂ (0 < x < 2.3).

The sintered body electrode according to the present invention preferably contains at least one carbon-based conductive agent in an amount of 0% by weight to 20% by weight selected from carbon black, acetylene black, Ketjenblack, carbon nanotube, and a vapor-grown carbon fiber (VGCF) conductive agent.

The sintered body electrode according to the present invention is preferably a negative electrode.

The sintered body electrode according to the present invention is preferably capable of absorbing and releasing alkali ions at 30°C after being thermally treated in an inert atmosphere at 500°C.

The sintered body electrode according to the present invention is preferably capable of being reversibly charged and discharged with a charge/discharge efficiency of 90% or more during charge and discharge at a cut-off voltage of 9 V to 0.001 V

A battery member according to the present invention includes: a solid electrolyte layer; and the above-described sintered body electrode layered on the solid electrolyte layer.

The solid electrolyte layer preferably has a thickness of 5 nm to 1 mm.

A battery according to the present invention includes the above-described battery member.

A method for manufacturing a sintered body electrode according to the present invention includes: a mixing step of mixing an alkali-ion conductive solid electrolyte precursor and a carbon electrode material precursor to obtain a mixture of the alkali-ion conductive solid electrolyte precursor and the carbon electrode material precursor, the carbon electrode material precursor being a precursor of a carbon electrode material made of graphite or hard carbon; the step of, after the mixing step, forming an electrode forming material layer containing the mixture; and the step of firing the electrode forming material layer.

Preferably, the electrode forming material layer is made of a paste or a powder compact each containing the alkali-ion conductive solid electrolyte precursor and the carbon electrode material precursor and, in the step of firing the electrode forming material layer, an alkali-ion conductive solid electrolyte and the carbon electrode material are concurrently obtained.

It is preferred that, in the step of forming an electrode forming material layer, a first firing step of firing the mixture to obtain a carbon electrode material is performed and the electrode forming material layer made of a paste or a powder compact each containing the alkali-ion conductive solid electrolyte precursor and the carbon electrode material is then formed, and, in the step of firing the electrode forming material layer, an alkali-ion conductive solid electrolyte is obtained from the alkali-ion conductive solid electrolyte precursor.

Preferably, the method further includes a third firing step of, after the mixing step, firing the mixture to concurrently obtain an alkali-ion conductive solid electrolyte and a carbon electrode material, and, in the step of forming an electrode forming material layer, the electrode forming material layer made of a paste or a powder compact each containing the alkali-ion conductive solid electrolyte and the carbon electrode material is formed.

A method for manufacturing a sintered body electrode according to another aspect of the present invention includes: a mixing step of mixing an alkali-ion conductive solid electrolyte precursor and a particulate carbon electrode material made of graphite or hard carbon to obtain a mixture of the alkali-ion conductive solid electrolyte precursor and the particulate carbon electrode material; the step of, after the mixing step, forming an electrode forming material layer made of a paste or a powder compact each containing the alkali-ion conductive solid electrolyte precursor and the particulate carbon electrode material; and the step of firing the electrode forming material layer to obtain an alkali-ion conductive solid electrolyte from the alkali-ion conductive solid electrolyte precursor and thus obtain the particulate carbon electrode material coated with a coating layer made of the alkali-ion conductive solid electrolyte.

A method for manufacturing a sintered body electrode according to still another aspect of the present invention includes: a mixing step of mixing an alkali-ion conductive solid electrolyte precursor, a carbon electrode material precursor, and a particulate carbon electrode material made of graphite or hard carbon to obtain a mixture of the alkali-ion conductive solid electrolyte precursor, the carbon electrode material precursor, and the particulate carbon electrode material, the carbon electrode material precursor being a precursor of a carbon electrode material made of graphite or hard carbon; the step of, after the mixing step, forming an electrode forming material layer made of a paste or a powder compact each containing the mixture; and the step of firing the electrode forming material layer to obtain an alkali-ion conductive solid electrolyte and a carbon electrode material from the alkali-ion conductive solid electrolyte precursor and the carbon electrode material precursor, respectively, and thus obtain the particulate carbon electrode material coated with a coating layer made of the alkali-ion conductive solid electrolyte and the carbon electrode material.

A method for manufacturing a battery member according to the present invention is a method for manufacturing a battery member including a laminate of a sintered body electrode and a solid electrolyte layer and includes: a mixing step of mixing an alkali-ion conductive solid electrolyte precursor and a carbon electrode material precursor to obtain a mixture of the alkali-ion conductive solid electrolyte precursor and the carbon electrode material precursor, the carbon electrode material precursor being a precursor of a carbon electrode material made of graphite or hard carbon; the step of, after the mixing step, forming an electrode forming material layer containing the mixture; the step of obtaining a sintered body electrode by firing the electrode forming material layer; and the step of obtaining a laminate of the sintered body electrode and a solid electrolyte layer.

Preferably, the electrode forming material layer is made of a paste or a powder compact each containing the alkali-ion conductive solid electrolyte precursor and the carbon electrode material precursor and the electrode forming material layer is fired to concurrently obtain an alkali-ion conductive solid electrolyte and a carbon electrode material.

It is preferred that, in the step of forming an electrode forming material layer, a first firing step of firing the mixture to obtain a carbon electrode material is performed and the electrode forming material layer made of a paste or a powder compact each containing the alkali-ion conductive solid electrolyte precursor and the carbon electrode material is formed, and the step of obtaining a sintered body electrode is a second firing step of firing the electrode forming material layer to obtain an alkali-ion conductive solid electrolyte.

It is preferred that: the method further includes, after the mixing step, a third firing step of firing the mixture to concurrently obtain an alkali-ion conductive solid electrolyte and a carbon electrode material; in the step of forming an electrode forming material layer, the electrode forming material layer made of a paste or a powder compact each containing the alkali-ion conductive solid electrolyte and the carbon electrode material is formed; and the step of obtaining a sintered body electrode is a fourth firing step of firing the electrode forming material layer.

A method for manufacturing a battery member according to another aspect of the present invention is a method for manufacturing a battery member including a laminate of a sintered body electrode and a solid electrolyte layer and includes: a mixing step of mixing an alkali-ion conductive solid electrolyte precursor and a particulate carbon electrode material made of graphite or hard carbon to obtain a mixture of the alkali-ion conductive solid electrolyte precursor and the particulate carbon electrode material; the step of, after the mixing step, forming an electrode forming material layer made of a paste or a powder compact each containing the alkali-ion conductive solid electrolyte precursor and the particulate carbon electrode material; the step of obtaining a sintered body electrode by firing the electrode forming material layer to obtain an alkali-ion conductive solid electrolyte from the alkali-ion conductive solid electrolyte precursor and obtain the particulate carbon electrode material coated with a coating layer made of the alkali-ion conductive solid electrolyte; and the step of obtaining a laminate of the sintered body electrode and a solid electrolyte layer.

Preferably, the method further includes a layering step of layering the solid electrolyte layer and the electrode forming material layer and the step of obtaining a sintered body electrode is performed after the layering step.

Preferably, the method further includes a layering step of layering a solid electrolyte forming material layer made of a paste or a powder compact each containing a solid electrolyte precursor and the electrode forming material layer, and, after the layering step, the electrode forming material layer and the solid electrolyte forming material layer are fired to concurrently obtain the sintered body electrode and the solid electrolyte layer.

An alkali-ion conductive solid electrolyte precursor solution according to the present invention contains an alkali metal element, a transition metal element, and carbonate ions.

The carbonate ions are preferably coordinated to the transition metal element.

The transition metal element is preferably at least one selected from the group consisting of group III elements and group IV elements.

The alkali-ion conductive solid electrolyte precursor solution according to the present invention preferably has a pH of 7 or more.

The alkali-ion conductive solid electrolyte precursor solution preferably contains NR₄⁺ (where Rs are each independently a substituent of at least one selected from the group consisting of H, CH₃, C₂H₅, and CHzCHzOH) as counterions to the carbonate ions.

The alkali-ion conductive solid electrolyte precursor solution according to the present invention is preferably a precursor solution of a solid electrolyte made of NASICON crystals.

The alkali-ion conductive solid electrolyte precursor solution according to the present invention is preferably a precursor solution of a sodium-ion conductive solid electrolyte.

An alkali-ion conductive solid electrolyte precursor according to the present invention is made of a gelled product or dried product of the above-described alkali-ion conductive solid electrolyte precursor solution.

An alkali-ion conductive solid electrolyte according to the present invention is made of a sintered body of the above-described alkali-ion conductive solid electrolyte precursor.

### [Advantageous Effects of Invention]

The present invention enables provision of a sintered body electrode, a battery member, sintered body electrode and battery member manufacturing methods, a solid electrolyte precursor solution, a solid electrolyte precursor, and a solid electrolyte all of which can increase the safety and operate a battery at low temperatures.

### [Brief Description of Drawings]

[Fig. 1]

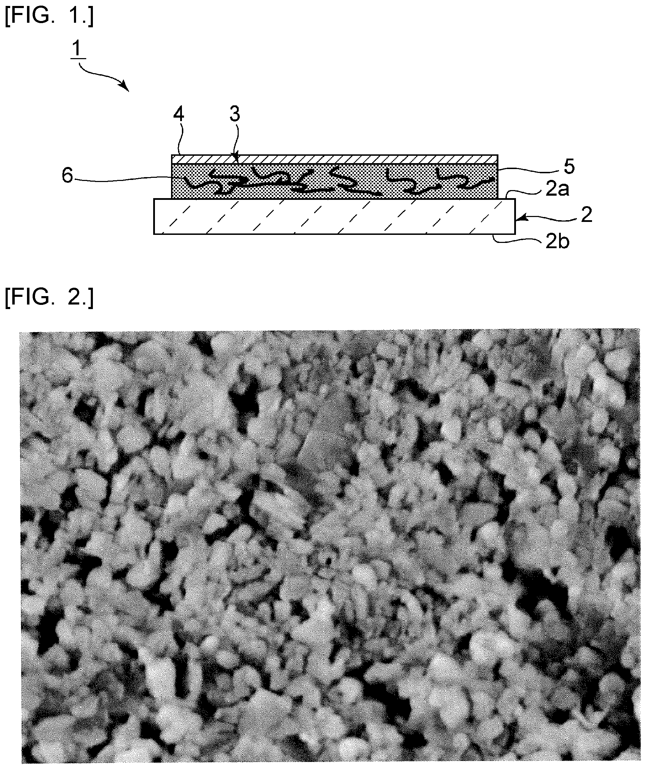

   Fig. 1 is a schematic cross-sectional view showing a battery member according to a first embodiment of the present invention.
[Fig. 2]
   Fig. 2 is a SEM photograph showing a sintered body electrode according to one embodiment of the present invention.
[Fig. 3]

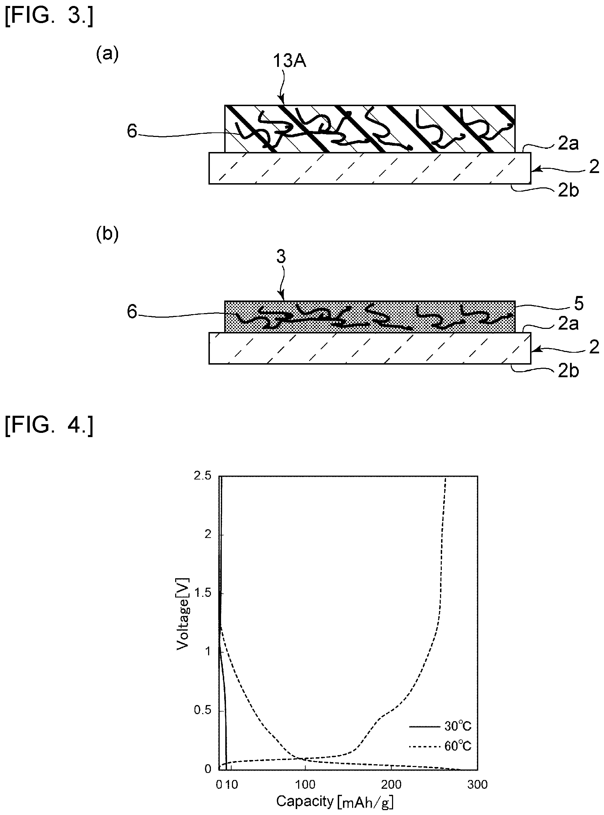

   Figs. 3(a) and 3(b) are schematic cross-sectional views for illustrating a method for manufacturing a battery member according to a first embodiment of the present invention.
[Fig. 4]
   Fig. 4 is a graph showing results of a charge and discharge test for a comparative example.
[Fig. 5]

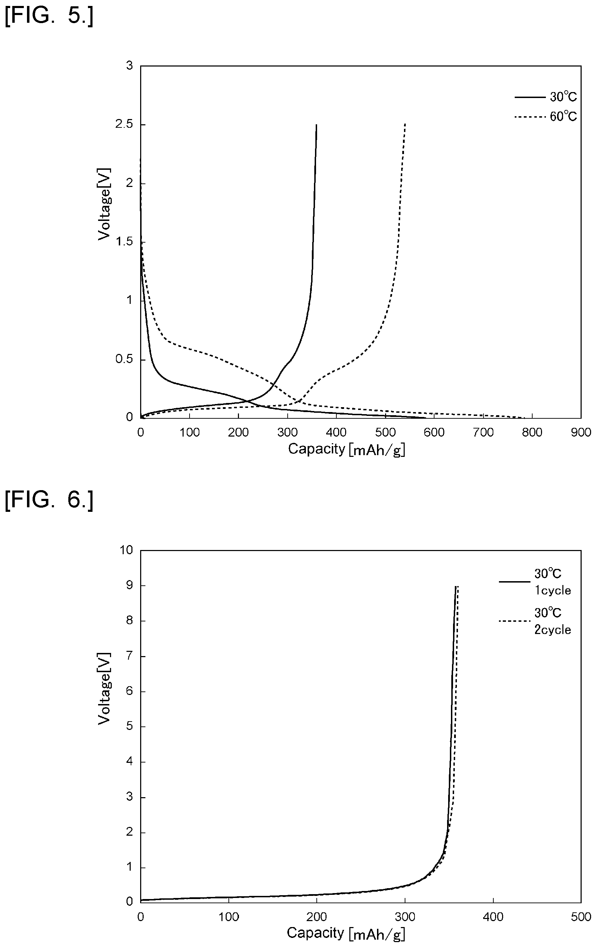

   Fig. 5 is a graph showing results of a charge and discharge test for Example 1 of the present invention.
[Fig. 6]
   Fig. 6 is a graph showing results of a charge and discharge test for a test battery produced in Example 1 of the present invention when charged and discharged at a cut-off voltage of 9 V to 0.001 V
[Fig. 7]

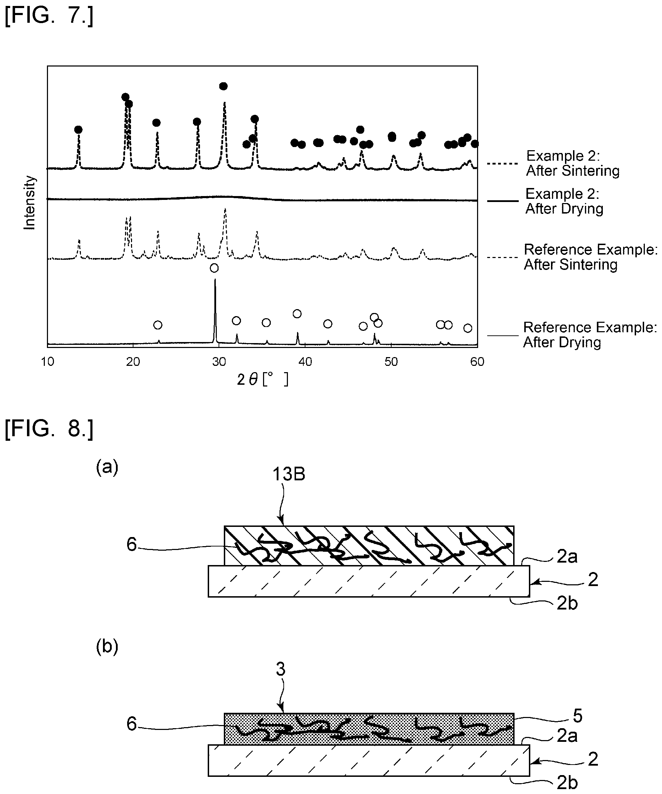

   Fig. 7 is a graph showing XRD (X-ray diffraction) charts after alkali-ion conductive solid electrolyte precursors produced in Example 2 of the present invention and a reference example are dried and after the alkali-ion conductive solid electrolyte precursors are fired.
[Fig. 8]
   Figs. 8(a) and 8(b) are schematic cross-sectional views for illustrating a method for manufacturing a battery member according to a second embodiment of the present invention.
[Fig. 9]

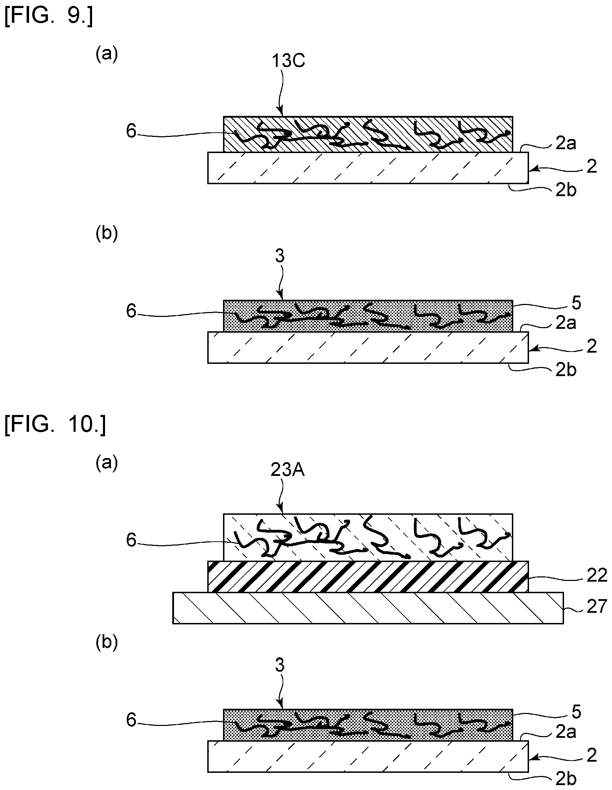

   Figs. 9(a) and 9(b) are schematic cross-sectional views for illustrating a method for manufacturing a battery member according to a third embodiment of the present invention.
[Fig. 10]
   Figs. 10(a) and 10(b) are schematic cross-sectional views for illustrating a method for manufacturing a battery member according to a fourth embodiment of the present invention.
[Fig. 11]

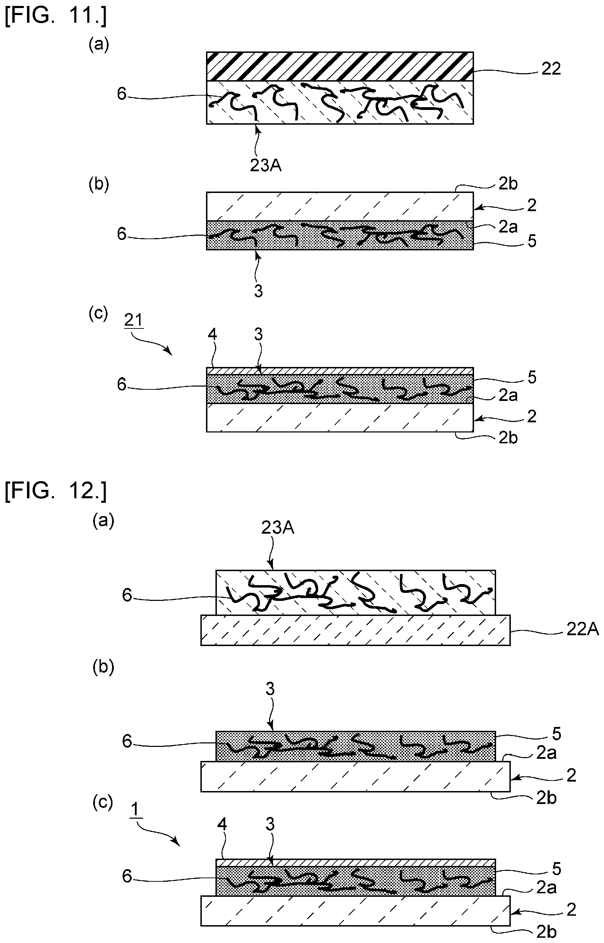

   Figs. 11(a) to 11(c) are schematic cross-sectional views for illustrating a method for manufacturing a battery member according to Modification 1 of the fourth embodiment of the present invention.
[Fig. 12]
   Figs. 12(a) to 12(c) are schematic cross-sectional views for illustrating a method for manufacturing a battery member according to Modification 2 of the fourth embodiment of the present invention.
[Fig. 13]

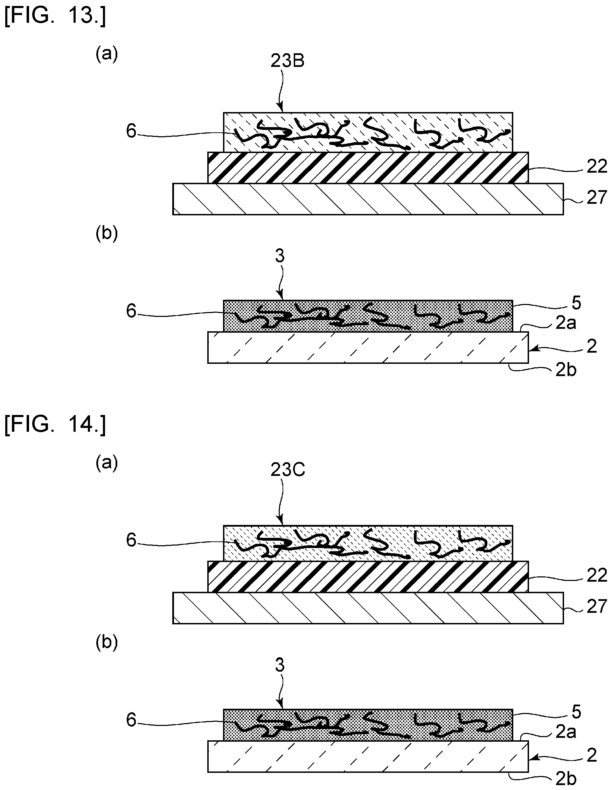

   Figs. 13(a) and 13(b) are schematic cross-sectional views for illustrating a method for manufacturing a battery member according to a fifth embodiment of the present invention.
[Fig. 14]
   Figs. 14(a) and 14(b) are schematic cross-sectional views for illustrating a method for manufacturing a battery member according to a sixth embodiment of the present invention.
[Fig. 15]

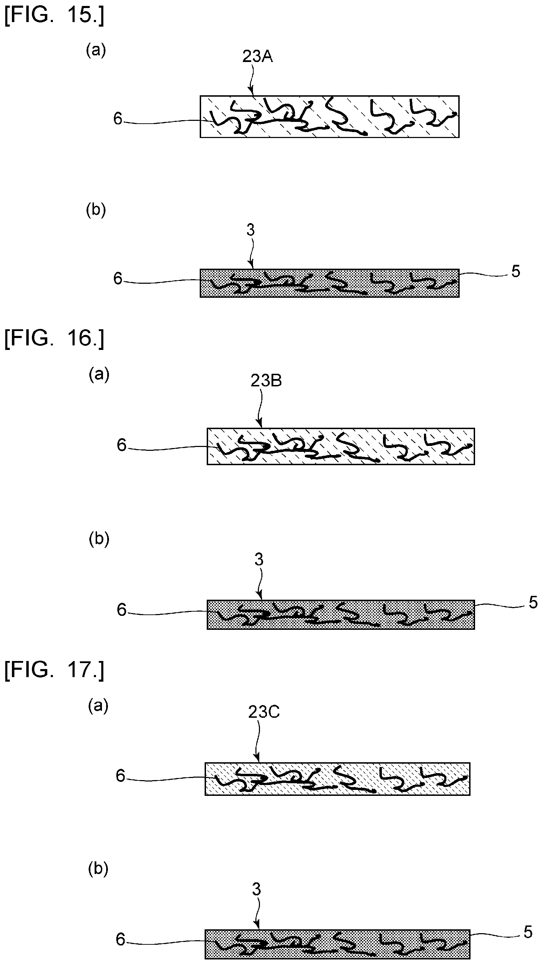

   Figs. 15(a) and 15(b) are schematic cross-sectional views for illustrating a method for manufacturing a sintered body electrode according to a seventh embodiment of the present invention.
[Fig. 16]
   Figs. 16(a) and 16(b) are schematic cross-sectional views for illustrating a method for manufacturing a sintered body electrode according to an eighth embodiment of the present invention.
[Fig. 17]
   Figs. 17(a) and 17(b) are schematic cross-sectional views for illustrating a method for manufacturing a sintered body electrode according to a ninth embodiment of the present invention.
[Fig. 18]

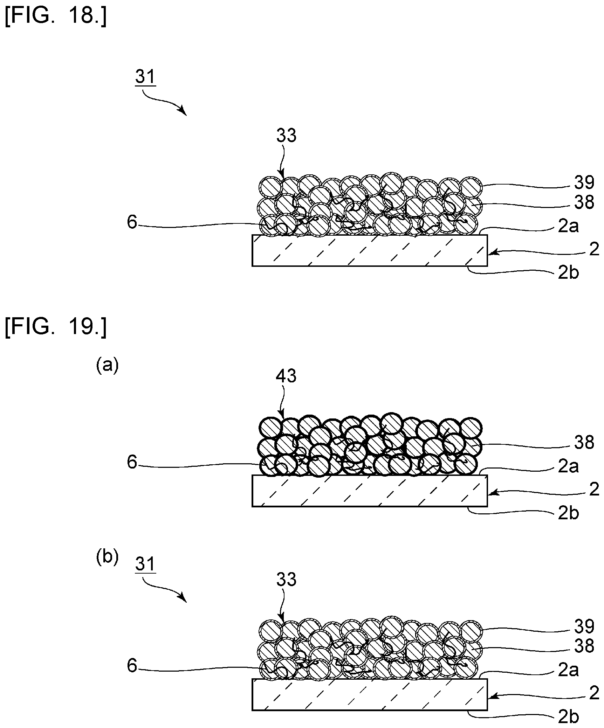

   Fig. 18 is a schematic cross-sectional view showing a battery member according to a second embodiment of the present invention.
[Fig. 19]
   Figs. 19(a) and 19(b) are schematic cross-sectional views for illustrating a method for manufacturing a battery member according to a tenth embodiment of the present invention.
[Fig. 20]

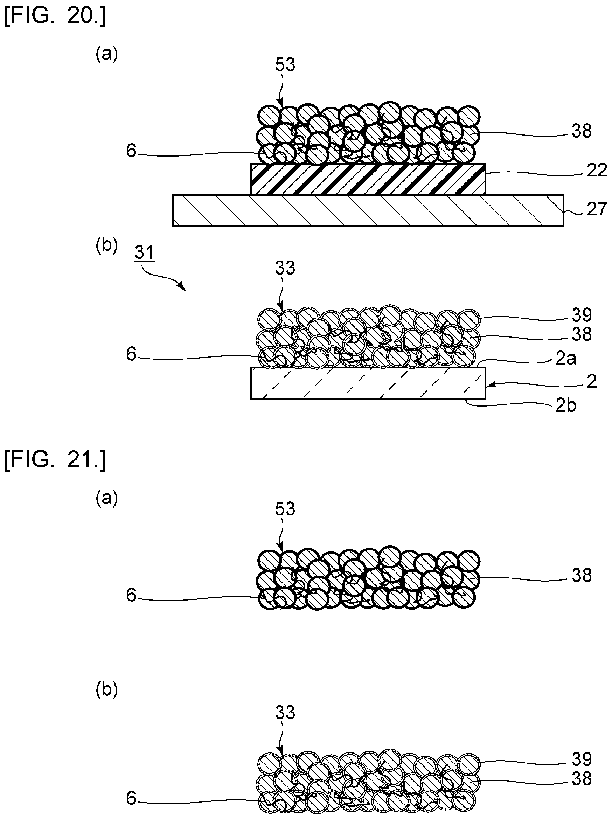

   Figs. 20(a) and 20(b) are schematic cross-sectional views for illustrating a method for manufacturing a battery member according to an eleventh embodiment of the present invention.
[Fig. 21]
   Figs. 21(a) and 21(b) are schematic cross-sectional views for illustrating a method for manufacturing a sintered body electrode according to a twelfth embodiment of the present invention.
[Fig. 22]

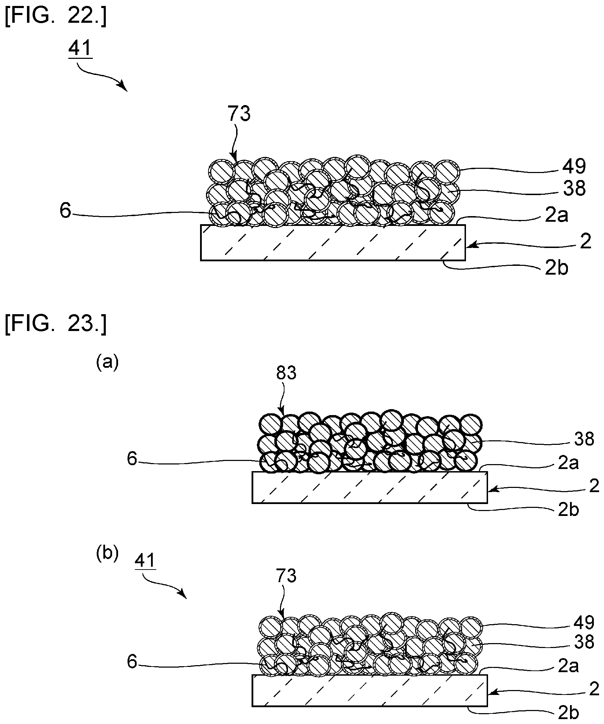

   Fig. 22 is a schematic cross-sectional view showing a battery member according to a third embodiment of the present invention.
[Fig. 23]
   Figs. 23(a) and 23(b) are schematic cross-sectional views for illustrating a method for manufacturing a battery member according to a thirteenth embodiment of the present invention.
[Fig. 24]

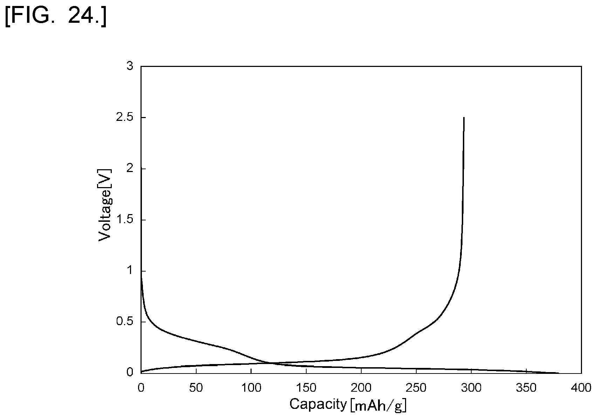

   Fig. 24 is a graph showing results of a charge and discharge test for Example 3 of the present invention.

### [Description of Embodiments]

Hereinafter, a description will be given of preferred embodiments. However, the following embodiments are merely illustrative and the present invention is not intended to be limited to the following embodiments. Throughout the drawings, members having substantially the same functions may be referred to by the same reference characters.

### [Battery Member]

### (First Embodiment)

Fig. 1 is a schematic cross-sectional view showing a battery member according to a first embodiment of the present invention. Fig. 1 is a schematic cross-sectional view of the member when viewed from a side surface thereof. The same applies to the below-described schematic cross-sectional views other than Fig. 1.

A battery member 1 includes a solid electrolyte layer 2, a sintered body electrode 3 according to one embodiment of the present invention, and a current collector 4. The solid electrolyte layer 2 has an alkali-ion conductivity. More specifically, the solid electrolyte layer 2 has a sodium-ion conductivity in this embodiment. Alternatively, the solid electrolyte layer 2 may have a lithium-ion conductivity. The solid electrolyte layer 2 is preferably as thin as possible for the purpose of increasing the energy density and its specific thickness is preferably 1 mm or less, more preferably 500 µm or less, and still more preferably 100 µm or less. The lower limit of the thickness is not particularly limited, but is, actually, preferably not less than 5 nm in order to ensure its mechanical strength and separator function.

The solid electrolyte layer 2 has a first principal surface 2a and a second principal surface 2b. The first principal surface 2a and the second principal surface 2b are opposed to each other. The sintered body electrode 3 is layered on the first principal surface 2a of the solid electrolyte layer 2. The current collector 4 is layered over the sintered body electrode 3. The current collector 4 is made of an appropriate thin metal film. The battery member 1 need not necessarily include the current collector 4. In the embodiments described hereinafter, the current collector 4 may not be shown in the figures.

In this embodiment, the sintered body electrode 3 is a negative electrode. When a positive electrode is layered on the second principal surface 2b of the solid electrolyte layer 2, an all-solid-state battery can be obtained.

The sintered body electrode 3 contains a carbon electrode material and an alkali-ion conductive solid electrolyte. The carbon electrode material is made of graphite or hard carbon. The alkali-ion conductive solid electrolyte has a sodium-ion conductivity in this embodiment. Alternatively, the alkali-ion conductive solid electrolyte may have a lithium-ion conductivity.

The sintered body electrode 3 contains a mixture phase 5 of the carbon electrode material and the alkali-ion conductive solid electrolyte. The mixture phase 5 is in particulate form. The particles in the mixture phase 5 are bound together by sintering.

Fig. 2 is a SEM photograph showing a sintered body electrode according to one embodiment of the present invention. From Fig. 2, it can be seen that particles are bound together. These particles form the mixture phase 5. It can be seen from the figure that in the mixture phase 5 the boundaries between the carbon electrode material and the alkali-ion conductive solid electrolyte cannot be recognized. As seen from this, in the mixture phase 5, the carbon electrode material and the alkali-ion conductive solid electrolyte are homogeneously mixed. The average particle diameter of the particles forming the mixture phase 5 is preferably 10 µm or less, more preferably 3 µm or less, still more preferably 500 nm or less, and particularly preferably 300 nm or less. Thus, the denseness of the sintered body electrode 3 can be increased.

Referring back to Fig. 1, the sintered body electrode 3 preferably contains a conductive agent 6. When the sintered body electrode 3 contains the conductive agent 6, conductive paths are formed inside, which enables reduction of the internal resistance of the sintered body electrode 3. If the amount of the conductive agent 6 added is too large, contraction during drying of a paste and sintering becomes large and, thus, the electrode is difficult to form. Therefore, the amount thereof added is preferably 0% by weight to 20% by weight and more preferably 0.1% by weight to 10% by weight. However, the sintered body electrode 3 need not necessary contain the conductive agent 6. The sintered body electrode 3 contains no binder (organic binder).

The battery member 1 includes the sintered body electrode 3 according to the present invention containing: a carbon electrode material made of graphite or hard carbon; and an alkali-ion conductive solid electrolyte. The sintered body electrode 3 has a small reactivity to water, unlike an electrode made of a sodium metal. In addition, the sintered body electrode 3 can be used in an all-solid-state battery, need not any organic electrolyte, and, therefore, has a smaller risk of firing. Hence, the safety can be increased. Furthermore, with the use of the battery member 1, the battery can be operated at low temperatures. The details of these effects will be described hereinafter with reference to a manufacturing method according to a first embodiment of the present invention and examples using this method. Herein, the embodiments of the present invention will be described by giving the battery members and manufacturing methods their respective sequential numbers. Specifically, a description will be given below of respective battery members according to first to third embodiments of the present invention and respective

battery member manufacturing methods or sintered body electrode manufacturing methods according to first to thirteenth embodiments of the present invention.

### [Manufacturing Method]

### (First Embodiment)

Figs. 3(a) and 3(b) are schematic cross-sectional views for illustrating a method for manufacturing a battery member according to a first embodiment. First, an electrode paste 13A and a solid electrolyte layer 2 each shown in Fig. 3(a) are prepared. The paste 13A is an electrode forming material layer defined in the present invention. The electrode forming material layer herein refers to a material layer for use in obtaining (forming) a sintered body electrode by firing. The electrode forming material layer may be, for example, made of a paste as in this embodiment or made of a powder compact.

In obtaining the paste 13A, an alkali-ion conductive solid electrolyte precursor is prepared. However, in this stage, an alkali-ion conductive solid electrolyte precursor solution is preferably prepared. Specific examples of the alkali-ion conductive solid electrolyte precursor and its solution will be described later. A carbon electrode material precursor (a precursor of a carbon electrode material made of graphite or hard carbon) is also prepared. As the carbon electrode material precursor, an appropriate sugar, biomass, polymer or the like can be used.

Next, the alkali-ion conductive solid electrolyte precursor solution and the carbon electrode material precursor are mixed and the mixture is then dried. Thus, a mixture of an alkali-ion conductive solid electrolyte precursor and the carbon electrode material precursor is obtained. Next, a powder obtained by grinding the mixture is mixed with a conductive agent 6 and a binder in an organic solvent. As the organic solvent, for example, N-methylpyrrolidone can be used. Thus, a paste 13A is obtained.

On the other hand, the solid electrolyte layer 2 can be obtained by mixing raw material powders, forming the mixed raw material powders into a shape, and then firing them. For example, the solid electrolyte layer 2 can be obtained by making the raw material powders into a slurry, forming the slurry into a green sheet, and then firing the green sheet. Alternatively, the solid electrolyte layer 2 may be obtained by the sol-gel method.

Next, as shown in Fig. 3(a), the paste 13A is applied on the first principal surface 2a of the solid electrolyte layer 2. In this manner, a layering step of layering the solid electrolyte layer 2 and the paste 13A as the electrode forming material layer is performed. Next, the laminate of the solid electrolyte layer 2 and the paste 13A is fired, in an N₂ atmosphere, at over 500°C and not higher than 1300°C (preferably, over 800°C and not higher than 1150°C). The firing can be performed in an inert atmosphere. For example, the firing may be performed in an Ar, Ne or He atmosphere or may be performed in vacuum. The same applies to the firing steps in the other embodiments.

Thus, an alkali-ion conductive solid electrolyte and a carbon electrode material are concurrently obtained and, as a result, a mixture phase 5 of the alkali-ion conductive solid electrolyte and the carbon electrode material is obtained. In this manner, as shown in Fig. 3(b), a sintered body electrode 3 is obtained and a laminate of the sintered body electrode 3 and the solid electrolyte layer 2 is obtained. If the firing temperature is too low, the reaction is insufficient, which makes it difficult to obtain a desired sintered body electrode 3. As a result, the sintered body electrode 3 tends to have a large internal resistance and thus decrease the charge/discharge efficiency. On the other hand, if the firing temperature is too high, the alkaline component evaporates from the alkali-ion conductive solid electrolyte precursor, which may make it difficult to obtain an alkali-ion conductive solid electrolyte having a desired composition. As a result, the sintered body electrode 3 tends to have a large internal resistance and thus decrease the charge/discharge efficiency.

Next, a current collector 4 is formed on the sintered body electrode 3. The method for forming the current collector 4 is not particularly limited and examples include physical vapor deposition methods, such as evaporation coating and sputtering, and chemical vapor deposition methods, such as thermal CVD, MOCVD, and plasma CVD. However, the current collector 4 need not necessarily be formed.

In the manner as thus far described, a battery member 1 can be obtained. The binder is decomposed by the firing. Therefore, the sintered body electrode 3 in the battery member 1 contains no binder. Here, specific examples of materials for the components of the battery member 1 will be described.

### Carbon Electrode Material Precursor

In using a sugar as the carbon electrode material precursor, examples thereof include sucrose, cellulose, D-glucose, and sucrose. In using biomass as the carbon electrode material precursor, examples thereof include cornstalk, sorghum stalk, pine cone, mangosteen, argan nut shell, chaff, dandelion, corn straw core, ramie fiber, cotton, kelp, and coconut meat skin. In using a polymer as the carbon electrode material precursor, examples thereof include PAN (polyacrylonitrile), pitch, PVC (polyvinyl chloride) nanofiber, polyaniline, sodium polyacrylate, tire (polymer for tire), and phosphorous-doped PAN.

### Alkali-Ion Conductive Solid Electrolyte in Sintered Body Electrode 3

The alkali-ion conductive solid electrolyte is preferably made of an oxide. An alkali-ion conductive solid electrolyte made of an oxide is stable to the atmosphere and, therefore, can increase the safety of the battery. Generally, an alkali-ion conductive solid electrolyte made of an oxide is a hard material having a high Young's modulus, is difficult to soften and flow by thermal treatment, and is therefore difficult to densify by cold pressing or firing. However, the manufacturing method according to this embodiment enables provision of a dense sintered body.

Examples of the alkali-ion conductive solid electrolyte include beta-alumina crystals and NASICON crystals both of which have excellent sodium ion conductivity. Beta-alumina includes two types of crystals: β-alumina (theoretical composition formula: Na₂O·11Al₂O₃) and β"-alumina (theoretical composition formula: Na₂O·5.3Al₂O₃). β"-alumina is a metastable material and is therefore generally used in a state in which LizO or MgO is added as a stabilizing agent thereto. β"-alumina has a higher sodium-ion conductivity than β-alumina. Therefore, β"-alumina alone or a mixture of β"-alumina and β-alumina is preferably used and Li₂O-stabilized β"-alumina (Na_{1.7}Li_{0.3}Al_{10.7}O₁₇) or MgO-stabilized β"-alumina ((Al_{10.32}Mg_{0.68}O₁₆)(Na_{1.68}O)) is more preferably used.

Examples of the NASICON crystals include compounds represented by a general formula Na₁₊ₓX₂P₃₋ₓSiₓO₁₂ (where X represents at least one transition metal element selected from group IV elements and 0 ≤ x ≤ 3). Particularly, the NASICON crystals preferably contain at least one of a first compound and a second compound both described below. The first compound is a compound represented by a general formula Na₁₊ₓZr₂P₃₋ₓSiₓO₁₂ (where 0 ≤ x ≤ 3). The second compound is a compound in which a part of Zr in the first compound is substituted with at least one element selected from the group consisting of Ca, Mg, Ba, Sr, Al, Nb, Ta, In, Ga, and group III elements. An example of the group III element is at least one selected from the group consisting of Sc, Y, and La.

Examples of the first compound and the second compound include Na₃Zr₂Si₂PO₁₂, Na₃Zr_{1.6}Ti_{0.4}Si₂PO₁₂, and Na₃Zr_{1.88}Y_{0.12}Si₂PO₁₂. Other examples of the NASICON crystal include Na_{3.2}Zr_{1.3}Si_{2.2}P_{0.7}O_{10.5}, Na₃Hf₂Si₂PO₁₂, Na_{3.4}Zr_{0.9}Hf_{1.4}Al_{0.6}Si_{1.2}P_{1.8}O₁₂, Na₃Zr_{1.7}Nb_{0.24}Si₂PO₁₂, Na_{3.6}Ti_{0.2}Y_{0.7}Si_{2.8}O₉, Na_{3.12}Zr_{1.88}Y_{0.12}Si₂PO₁₂, Na_{3.6}Zr_{0.13}Yb_{1.67}Si_{0.11}P_{2.9}O₁₂, and Na_{3.12}Zr_{1.88}Y_{0.12}Si₂PO₁₂.

Other than those above, examples of the alkali-ion conductive solid electrolyte include crystalline phases represented by a general formula Na₅XSi₄O₁₂. X is at least one selected from group III transition metal elements, more specifically, rare earth elements. Rare earth elements include, in addition to Dy, Gd, Y, and Sm, Sc, La, Ce, Pr, Nd, Pm, Eu, Tb, Ho, Er, Tm, Yb, and Lu. Pr, Nd, Sm, Gd, Dy or Y is preferably used and Y, Sm, Dy or Gd is more preferably used. Alternatively, a part of Si may be substituted with P.

The alkali-ion conductive solid electrolyte may be a crystalline phase represented by a general formula Li₇La₃Zr₂O₁₂, Li₇La₃Zr₂₋ₓMₓO₁₂ (where M represents at least one selected from Nb, Ga, and Ta and 0 < x < 2) or Li₇₋₃ₓAlₓLa₃Zr₂O₁₂ (0 < x < 2.3).

### Alkali-Ion Conductive Solid Electrolyte Precursor and Solution thereof

When the alkali-ion conductive solid electrolyte is beta-alumina, an alkali-ion conductive solid electrolyte precursor can be obtained, for example, by mixing aluminum nitrate, sodium nitrate, and lithium nitrate. In doing so, the ratio among these materials is adjusted to give a desired composition ratio of the alkali-ion conductive solid electrolyte.

When the alkali-ion conductive solid electrolyte is NASICON crystals or Na₅XSi₄O₁₂ crystals, an example of an alkali-ion conductive solid electrolyte precursor solution is a solution containing an alkali metal element and a transition metal element both forming the alkali-ion conductive solid electrolyte, and carbonate ions. In the solution, the alkali metal element is contained in the form of alkali ions and the transition metal element is contained in the form of transition metal ions. The alkali-ion conductive solid electrolyte precursor is made of, for example, a gelled product or dried product of the alkali-ion conductive solid electrolyte precursor solution. Furthermore, the alkali-ion conductive solid electrolyte is made of a sintered body of the alkali-ion conductive solid electrolyte precursor.

The alkali metal element in the alkali-ion conductive solid electrolyte precursor or the solution of the alkali-ion conductive solid electrolyte precursor is, for example, at least one selected from the group consisting of Li, Na, and K. The transition metal element is, for example, at least one selected from the group consisting of group III elements and group IV elements. The transition metal element is preferably Ti, Zr, Hf, Sc, Y, La, Sm, Dy or Gd, more preferably Zr, Hf, Sc, Y, La, Sm, Dy or Gd, still more preferably Zr, Hf, Sc, Y, La or Sm, and particularly preferably Zr, Hf, Y, La or Sm. Other than these transition metal elements, the alkali-ion conductive solid electrolyte precursor or the solution thereof may include at least one selected from the group consisting of Ca, Mg, Ba, Sr, Al, Nb, Ta, In, and Ga. In the alkali-ion conductive solid electrolyte precursor solution, carbonate ions may be contained as a carbonate (a carbonate of a transition metal) or a mixture of carbonate ions and a carbonate. In these cases, the alkali-ion conductive solid electrolyte precursor solution is suitable, for example, as a precursor solution of a sodium-ion conductive solid electrolyte.

As the alkali-ion conductive solid electrolyte precursor solution, a solution containing nitrate ions instead of carbonate ions may be used. However, the alkali-ion conductive solid electrolyte precursor solution is preferably a solution containing carbonate ions for the following reasons.

When a solution containing nitrate ions is used as the alkali-ion conductive solid electrolyte precursor solution, there is a tendency that components in the solution heterogeneously precipitate during mixing or drying of the solution and, thus, a heterogeneous phase causing a decrease in ionic conductivity after firing is formed. Furthermore, the weight reduction due to decomposition of nitrate ions in the firing process is significant, which makes it difficult to form a homogeneous thin film layer. In addition, the production cost of facilities and so on for processing corrosive gas, such as NOₓ, generating in the firing process may increase. Furthermore, the solution containing nitrate ions is highly acidic and, therefore, requires high-level chemical durability of production facilities. Also in this respect, the production cost may increase.

On the other hand, when a solution containing carbonate ions is used as the alkali-ion conductive solid electrolyte precursor solution, a transition metal element in a transition metal oxide, such as ZrOz or Y₂O₃, normally dissolvable in an acidic region only is dissolved in the solution by being coordinated by carbonate ions to form a complex, which enables preparation of a metallic salt solution having neutrality to weak basicity (pH 7 or more, preferably 7.5 or more, more preferably 8 or more, still more preferably 8.5 or more, and particularly preferably 9 or more). In this case, not only an alkali metal component forming part of the alkali-ion conductive solid electrolyte can be dissolved as a carbonate or a hydroxide in the solution, but also a Si component forming another part of the alkali-ion conductive solid electrolyte can be added as liquid glass (sodium silicate: Na₂O·nSiO₂). Therefore, an alkali-ion conductive solid electrolyte precursor solution can be easily prepared.

In the alkali-ion conductive solid electrolyte precursor solution, carbonate ions are preferably coordinated bidentately to the transition metal element. In this case, the transition metal element can be stably present in the solution.

The alkali-ion conductive solid electrolyte precursor solution preferably contains NR₄⁺ (where Rs are each independently a substituent of at least one selected from the group consisting of H, CH₃, C₂H₅, and CHzCHzOH) as counterions to the carbonate ions. By doing so, the transition metal element can be stably present in the solution.

The alkali-ion conductive solid electrolyte precursor solution can be obtained, for example, by mixing liquid glass (sodium silicate), tripolyphosphoric acid, and zirconium ammonium carbonate aqueous solution.

### Conductive Agent 6

As the conductive agent 6, for example, a conductive carbon can be used. Examples of the conductive carbon include acetylene black, carbon black, Ketjenblack, carbon nanotube, and a vapor-grown carbon fiber (VGCF) conductive agent. The conductive agent 6 is preferably a carbon-based conductive agent made of any of the materials as just described.

### Binder

The binder is a material for binding raw materials (raw material powders) together. Examples of the binder include: cellulose derivatives, such as carboxymethyl cellulose, hydroxypropylmethyl cellulose, hydroxypropyl cellulose, ethyl cellulose, hydroxyethyl cellulose, and hydroxymethyl cellulose, or water-soluble polymers, such as polyvinyl alcohol; thermosetting resins, such as thermosetting polyimide, phenolic resin, epoxy resin, urea resin, melamine resin, unsaturated polyester resin, and polyurethane; polycarbonate-based resins, such as polypropylene carbonate; polyvinylidene fluoride; polyacrylic acid; sodium polyacrylate; polyacrylonitrile; polyethylene oxide; and butyral resin.

### Solid Electrolyte Layer 2

A solid electrolyte of the same type as the alkali-ion conductive solid electrolyte in the sintered body electrode 3 can be used.

### Current Collector 4

The material for the current collector 4 is not particularly limited, but metallic materials, such as aluminum, nickel, titanium, silver, copper, stainless steel, tungsten or an alloy of any of them, can be used. These metallic materials may be used singly or in combination of two or more of them. The alloy of any of them means an alloy containing at least one of the above metals.

Hereinafter, the details of the effects of the present invention will be described by comparison between a working example and a comparative example.

### [Example 1]

### <Preparation of Alkali-Ion Conductive Solid Electrolyte Precursor>

Liquid glass (sodium silicate: Na₂O·nSiO₂), zirconium ammonium carbonate aqueous solution ((NH₄)₂Zr(OH)₂(CO₃)₂), and sodium tripolyphosphate (Na₅P₃O₁₀) were weighed 25 g in total to provide NASICON crystals having a composition ratio of Na₃Zr₂Si₂PO₁₂. These materials were added to 150 g of pure water, followed by stirring with a hot stirrer at 50°C for 24 hours. Thus, an alkali-ion conductive solid electrolyte precursor solution (pH = 9.7) was obtained. Next, this solution was allowed to stand overnight in a thermostat bath at approximately 5°C, thus turning it into a gel. In this manner, an alkali-ion conductive solid electrolyte precursor was prepared.

### <Production of Mixture of Alkali-Ion Conductive Solid Electrolyte Precursor and Carbon Electrode Material Precursor>

Sucrose being a carbon electrode material precursor and serving as a source of hard carbon and the alkali-ion conductive solid electrolyte precursor were mixed for an hour in a stirrer to give a weight ratio of 4:1, thus obtaining a mixture. Next, the mixture was dried for 12 hours in a thermostat bath at 60°C, then vacuum dried at 100°C for six hours, and then ground into powdered form in an agate mortar.

### <Production of Electrode Paste>

A powder of the mixture of the alkali-ion conductive solid electrolyte precursor and the carbon electrode material precursor and a conductive agent (acetylene black) were weighed to give a weight ratio of 19: 1. A PPC (polypropylene carbonate) binder was added to these materials to have an external ratio of 15% by weight and all components were mixed in a N-methylpyrrolidone solvent with a planetary centrifugal mixer, thus obtaining an electrode paste.

### <Production of Battery Member>

A solid electrolyte layer of Na₃Zr₂Si₂PO₁₂ having a thickness of 500 µm was separately prepared. The electrode paste was applied to a thickness of 70 µm on the first principal surface of the solid electrolyte layer and dried in a drier at 50°C, thus forming an electrode forming material layer. After the drying, the electrode forming material layer on the solid electrolyte layer was fired at 1000°C for two hours in a nitrogen atmosphere (N₂: 99.9999%) to precipitate a mixture phase of an alkali-ion conductive solid electrolyte having a composition of Na₃Zr₂Si₂PO₁₂ and a carbon electrode material made of hard carbon, thus obtaining a sintered body electrode. Next, a current collector was formed on the sintered body electrode by sputtering. The current collector was formed of an aluminum thin film. In the manner as thus far described, a battery member was obtained. The sintered body electrode in this example is a negative electrode.

### <Production of Test Battery>

Metal sodium was attached as a counterelectrode to the second principal surface of the solid electrolyte layer in a glove box, thus producing a test battery.

### [Comparative Example]

A test battery was produced in the same manner as in Example 1 except that the negative electrode was made of a mixture of hard carbon and a PEO- (polyethylene oxide)-based polymer solid electrolyte (a mixture of PEO and NaPF₆ at a weight ratio of 9:1).

### <Charge and Discharge Test>

Each of the test batteries underwent a charge and discharge test in a thermostat bath at 30°C. Specifically, the charge capacity and the discharge capacity of the test battery were measured by subjecting it to charging (insertion of sodium ions) at a cut-off voltage of 0.001 V and subjecting it to discharging (extraction of sodium ions) at a cut-off voltage of 2.5 V In doing so, in Example 1, charging and discharging were conducted by assuming (the weight of the produced negative electrode, i.e., the above-described sintered body electrode) × 300 mAh/g as an actual capacity and setting a current value to give a C-rate of 0.1. Also at 60°C, the charge capacity and discharge capacity were measured in the same manner as described above.

Fig. 4 is a graph showing the results of the charge and discharge test for the comparative example. Fig. 5 is a graph showing the results of the charge and discharge test for Example 1.

As shown in Fig. 4, in Comparative Example, the charge capacity and the discharge capacity at 60°C were both about 250 mAh/g to about 280 mAh/g. However, at 30°C, the charge capacity and the discharge capacity were both less than 10 mAh/g, which showed the battery did not sufficiently operate. The reason for the occurrence of this difference is that a polymer-based electrode significantly changes its ionic conductivity with changing temperature.

Unlike the above, as shown in Fig. 5, it can be seen that, in Example 1, the charge capacity and the discharge capacity both exceeded 350 mAh/g not only at 60°C but also at 30°C. As seen from this, a battery in which the battery member according to the present invention is used sufficiently operates even at a temperature as low as 30°C. In addition, since the battery need not any organic electrolyte, it has a small risk of firing and can increase the safety.

Next, a description will be given of the details of the effects of the present invention in relation to the alkali-ion conductive solid electrolyte precursor solution with reference to a working example and a reference example.

### [Example 2]

An alkali-ion conductive solid electrolyte precursor solution was obtained in the same manner as in Example 1. This solution was allowed to stand overnight in a thermostat bath at approximately 5°C to turn it into a gel, thus obtaining an alkali-ion conductive solid electrolyte precursor.

The obtained alkali-ion conductive solid electrolyte precursor was dried for 12 hours in a thermostat bath at 60°C and then vacuum dried at 100°C for six hours. When the alkali-ion conductive solid electrolyte precursor after the drying was analyzed by XRD, it was found that, as shown in the relevant XRD chart in Fig. 7, the alkali-ion conductive solid electrolyte precursor was amorphous and its components were homogeneously dispersed.

The alkali-ion conductive solid electrolyte precursor after the drying was fired at 1000°C for three hours, thus obtaining an alkali-ion conductive solid electrolyte. When the obtained alkali-ion conductive solid electrolyte was analyzed by XRD, it was confirmed that, as shown in Fig. 7, desired NASICON crystals (Na₃Zr₂Si₂PO₁₂) precipitated (the plots (solid circles) in the XRD chart relevant to "Example 2: After

Drying" in Fig. 7 show peak positions of Na₃Zr₂Si₂PO₁₂ crystals). When the ionic conductivity of the alkali-ion conductive solid electrolyte was measured, it was 1.5 × 10⁻⁴ S.

For the measurement of the ionic conductivity, a gold electrode was formed as an ion blocking electrode on a surface of the alkali-ion conductive solid electrolyte, the alkali-ion conductive solid electrolyte was then measured in a frequency range of 1 to 10⁷ Hz by the AC impedance method to obtain a Cole-Cole plot, and resistance values were determined from the Cole-Cole plot. The ionic conductivity was calculated from the obtained resistance values. The measurement by the AC impedance method was conducted at 20°C.

### [Reference Example]

An alkali-ion conductive solid electrolyte precursor was obtained in the same manner as in Example 2 except that a zirconium nitrate aqueous solution (ZrO(NO₃)₂) was used instead of the zirconium ammonium carbonate aqueous solution.

When the obtained alkali-ion conductive solid electrolyte precursor was dried in the same manner as in Example 2 and the alkali-ion conductive solid electrolyte precursor after the drying was analyzed by XRD (X-ray diffraction), it was found that, as shown in Fig. 7, sodium nitrate precipitated and the components were thus heterogeneous (the plots (open circles) in the XRD chart relevant to "Reference Example: After Drying" in Fig. 7 show peak positions of sodium nitrate crystals).

The alkali-ion conductive solid electrolyte precursor after the drying was fired at 1000°C for three hours, thus obtaining an alkali-ion conductive solid electrolyte. When the obtained alkali-ion conductive solid electrolyte was analyzed by XRD, it was confirmed that, as shown in Fig. 7, not only NASICON crystals (Na₃Zr₂Si₂PO₁₂) precipitated, but also a heterogeneous phase partially precipitated. When the ionic conductivity of the alkali-ion conductive solid electrolyte was measured in the same manner as in Example 2, it was as low as 6.0 × 10⁻⁷ S. This can be attributed to a low ionic conductivity of the precipitated heterogeneous phase.

The above-described method for manufacturing a battery member 1 according to the first embodiment includes a heating step at approximately 1000°C. Therefore, the sintered body electrode 3 is difficult to decompose even if it is thermally treated again. For example, after being thermally treated in an inert atmosphere at 500°C, the sintered body electrode 3 can absorb and release alkali ions at 30°C. Thus, the thermal resistance can be effectively increased. In contrast, if a general electrode containing a binder as a solid electrolyte is thermally treated in an inert atmosphere at 500°C, the binder is decomposed to lose the function of the solid electrolyte, which makes it impossible for the battery to absorb and release alkali ions at 30°C. It is also found that the sintered body electrode 3 according to the present invention is difficult to decompose even if a voltage of about 8 V to 9 V is applied thereto. For example, Fig. 6 is a graph showing the results of a charge and discharge test for the test battery produced in Example 1 described above when charged and discharged at a cut-off voltage of 9 V to 0.001 V As shown in Fig. 6, even when a high voltage of 9 V was applied to the test battery, no plateau due to decomposition appeared and the test battery could be reversibly charged and discharged with a charge/discharge efficiency of 90% or more. As just described, the voltage resistance can also be increased. In addition, the carbon electrode material precursor for use in producing the sintered body electrode 3 may be sugar, such as sucrose, or biomass, and these materials are easily available. Therefore, the productivity can be effectively increased.

Here, in the example described above, water was used as a solvent in mixing the alkali-ion conductive solid electrolyte precursor and the carbon electrode material precursor. Particularly, sugar, such as sucrose, has a high solubility in water. Therefore, in mixing the alkali-ion conductive solid electrolyte precursor and the carbon electrode material precursor, the homogeneity of the mixture can be effectively increased. In the battery member according to this embodiment, before the alkali-ion conductive solid electrolyte and the carbon electrode material are obtained, their precursors are homogeneously mixed. Therefore, the contact area between them can be effectively large, which enables high output and rapid charge and discharge.

Hereinafter, other examples of a method for manufacturing a battery member will be described.

### [Manufacturing Method]

A description will be given below of respective battery member manufacturing methods or sintered body electrode manufacturing methods according to second to ninth embodiments of the present invention.

### (Second Embodiment)

Figs. 8(a) and 8(b) are schematic cross-sectional views for illustrating a method for manufacturing a battery member according to the second embodiment. First, an electrode paste 13B and a solid electrolyte layer 2 each shown in Fig. 8(a) are prepared. The paste 13B is an electrode forming material layer defined in the present invention.

In obtaining the paste 13B, a mixture powder of an alkali-ion conductive solid electrolyte precursor and a carbon electrode material precursor is obtained in the same manner as in the manufacturing method according to the first embodiment. Next, the mixture powder is fired in an N₂ atmosphere at not lower than 200°C and not higher than 800°C. Alternatively, the upper limit of the temperature may not be higher than 500°C in consideration of the firing temperature during a second firing step to be described hereinafter. Thus, a carbon electrode material is obtained from the carbon electrode material precursor. This step is a first firing step. By the first firing step, a mixture powder of the alkali-ion conductive solid electrolyte precursor and the carbon electrode material is obtained. If the firing temperature is too low, the carbon electrode material precursor is less likely to change into a carbon electrode material. On the other hand, if the firing temperature is too high, the alkali-ion conductive solid electrolyte precursor tends to change into an alkali-ion conductive solid electrolyte.

Next, the mixture powder is ground and mixed with a conductive agent 6 and a binder in an organic solvent, thus obtaining a paste 13B. Next, as shown in Fig. 8(a), the paste 13B is applied on the first principal surface 2a of the solid electrolyte layer 2. In this manner, a layering step of layering the solid electrolyte layer 2 and the paste 13B as the electrode forming material layer is performed. Next, the laminate of the solid electrolyte layer 2 and the paste 13B is fired, in an N₂ atmosphere, at over 500°C and not higher than 1300°C (preferably, over 800°C and not higher than 1150°C). Thus, an alkali-ion conductive solid electrolyte is obtained from the alkali-ion conductive solid electrolyte precursor and, as a result, a mixture phase 5 of the alkali-ion conductive solid electrolyte and the carbon electrode material is obtained. This step is a second firing step. In the second firing step, firing is performed at a higher temperature than in the first firing step. By the second firing step, a sintered body electrode 3 is obtained as shown in Fig. 8(b). In this manner, a laminate of the sintered body electrode 3 and the solid electrolyte layer 2 is obtained. If the firing temperature is too low, the reaction is insufficient, which makes it difficult to obtain a desired sintered body electrode 3. As a result, the sintered body electrode 3 tends to have a large internal resistance and thus decrease the charge/discharge efficiency. On the other hand, if the firing temperature is too high, the alkaline component evaporates from the alkali-ion conductive solid electrolyte precursor, which may make it difficult to obtain an alkali-ion conductive solid electrolyte having a desired composition. As a result, the sintered body electrode 3 tends to have a large internal resistance and thus decrease the charge/discharge efficiency. Next, a current collector 4 is formed on the sintered body electrode 3. In the manner as thus far described, a battery member 1 can be obtained.

In the first embodiment shown in Figs. 3(a) and 3(b), during the firing step, both a reaction of changing from the alkali-ion conductive solid electrolyte precursor to the alkali-ion conductive solid electrolyte and a reaction of changing from the carbon electrode material precursor to the carbon electrode material occur. Therefore, the amount of decomposing components in the firing step is large, which invites a large difference in thickness between the paste 13A and the sintered body electrode 3. Specifically, the thickness of the sintered body electrode 3 is likely to be smaller than the thickness of the paste 13A.

Unlike the above, in this embodiment, the first firing step is performed before the step of forming an electrode forming material layer, i.e., the step of forming a paste 13B. Thus, before the formation of the paste 13B, the reaction for obtaining a carbon electrode material from a carbon electrode material precursor is performed. Therefore, the amount of decomposing components in the second firing step after the formation of the paste 13B is small. As a result, the difference in thickness between the paste 13B and the sintered body electrode 3 is small. Hence, the thickness of the sintered body electrode 3 can be easily controlled. In addition, even when the thickness of the paste 13B is large, the sintered body electrode 3 obtained after the firing is less likely to cause inconveniences, such as cracks. As a result, the thickness of the sintered body electrode 3 can be easily increased and, therefore, the capacity can be easily increased. However, in the first embodiment, the number of times of firing step for obtaining a sintered body electrode 3 is only one, which simplifies the process.

### (Third Embodiment)

Figs. 9(a) and 9(b) are schematic cross-sectional views for illustrating a method for manufacturing a battery member according to the third embodiment. First, an electrode paste 13C and a solid electrolyte layer 2 each shown in Fig. 9(a) are prepared. The paste 13C is an electrode forming material layer defined in the present invention.

In obtaining the paste 13C, a mixture powder of an alkali-ion conductive solid electrolyte precursor and a carbon electrode material precursor is obtained in the same manner as in the manufacturing method according to the first embodiment. Next, the mixture powder is fired, in an N₂ atmosphere, at over 500°C and not higher than 1150°C (preferably, over 800°C and not higher than 1100°C). Thus, an alkali-ion conductive solid electrolyte and a carbon electrode material are concurrently obtained. This step is a third firing step. By the third firing step, a mixture powder of the alkali-ion conductive solid electrolyte and the carbon electrode material is obtained. If the firing temperature is too low, the mixture powder of the alkali-ion conductive solid electrolyte and the carbon electrode material is difficult to obtain. On the other hand, if the firing temperature is too high, the alkaline component evaporates from the alkali-ion conductive solid electrolyte precursor, which may make it difficult to obtain an alkali-ion conductive solid electrolyte having a desired composition.

Next, the mixture powder is ground and mixed with a conductive agent 6 and a binder in an organic solvent, thus obtaining a paste 13C. Next, as shown in Fig. 9(a), the paste 13C is applied on the first principal surface 2a of the solid electrolyte layer 2. In this manner, a layering step of layering the solid electrolyte layer 2 and the paste 13C as the electrode forming material layer is performed. Next, the laminate of the solid electrolyte layer 2 and the paste 13C is fired, in an N₂ atmosphere, at not lower than 600°C and not higher than 1300°C (preferably, not lower than 900°C and not higher than 1250°C). This step is a fourth firing step. In the fourth firing step, firing is performed at a higher temperature than in the third firing step. By the fourth firing step, a sintered body electrode 3 is obtained as shown in Fig. 9(b). If the firing temperature is too low, the sinterability of the sintered body electrode 3 and the bondability between the sintered body electrode 3 and the solid electrolyte layer 2 may be insufficient. As a result, the sintered body electrode 3 tends to have a large internal resistance and thus decrease the charge/discharge efficiency. On the other hand, if the firing temperature is too high, the alkaline component evaporates from the alkali-ion conductive solid electrolyte precursor, which may make it difficult to obtain an alkali-ion conductive solid electrolyte having a desired composition. As a result, the sintered body electrode 3 tends to have a large internal resistance and thus decrease the charge/discharge efficiency. Next, a current collector 4 is formed on the sintered body electrode 3. In the manner as thus far described, a battery member 1 can be obtained.

In this embodiment, the third firing step is performed before the step of forming a paste 13C. Thus, before the formation of the paste 13C, both a reaction of changing from the alkali-ion conductive solid electrolyte precursor to the alkali-ion conductive solid electrolyte and a reaction of changing from the carbon electrode material precursor to the carbon electrode material occur. Therefore, the amount of decomposing components in the fourth firing step after the formation of the paste 13C is smaller. As a result, the difference in thickness between the paste 13C and the sintered body electrode 3 is smaller. Hence, the thickness of the sintered body electrode 3 can be more easily controlled. In addition, the thickness of the sintered body electrode 3 can be more easily increased and, therefore, the capacity can be more easily increased. However, in the second embodiment, the battery member 1 can be manufactured at a lower temperature than in the third embodiment.

### (Fourth Embodiment)

Figs. 10(a) and 10(b) are schematic cross-sectional views for illustrating a method for manufacturing a battery member according to the fourth embodiment. First, a powder compact 23A and a paste 22 containing a solid electrolyte precursor, each shown in Fig. 10(a), are prepared. The powder compact 23A is an electrode forming material layer defined in the present invention. The paste 22 is a solid electrolyte forming material layer defined in the present invention. The solid electrolyte forming material layer herein refers to a material layer for use in obtaining (forming) a solid electrolyte layer by firing. The solid electrolyte forming material layer may be, for example, made of a paste as in this embodiment or made of a powder compact.

In obtaining the powder compact 23A, a mixture powder of an alkali-ion conductive solid electrolyte precursor and a carbon electrode material precursor is obtained in the same manner as in the manufacturing method according to the first embodiment. Next, the mixture powder and the conductive agent 6 are mixed and the mixture is then pressed into a shape, thus obtaining a powder compact 23A of the alkali-ion conductive solid electrolyte precursor, the carbon electrode material precursor, and the conductive agent 6. In the pressing, for example, a uniaxial pressing may be used. The conductive agent 6 need not necessarily be added.

On the other hand, the paste 22 can be obtained by adding mixed raw material powders into an organic solvent. Next, as shown in Fig. 10(a), the paste 22 is applied on an appropriate base material 27. As the base material 27, a sheet made of an appropriate metal, ceramic or others can be used. Next, the powder compact 23A is layered on the paste 22. Next, the laminate of the paste 22 and the powder compact 23A is fired, in an N₂ atmosphere, at over 500°C and not higher than 1300°C (preferably, over 800°C and not higher than 1150°C). Thus, as shown in Fig. 10(b), a solid electrolyte layer 2 and a sintered body electrode 3 are concurrently obtained. In this manner, a laminate of the solid electrolyte layer 2 and the sintered body electrode 3 is obtained. If the firing temperature is too low, the reaction is insufficient, which makes it difficult to obtain a desired sintered body electrode 3. Furthermore, a desired solid electrolyte layer 2 is difficult to obtain. In addition, the bondability between the sintered body electrode 3 and the solid electrolyte layer 2 may be insufficient. As a result, the sintered body electrode 3 tends to have a large internal resistance and thus decrease the charge/discharge efficiency. On the other hand, if the firing temperature is too high, the alkaline component evaporates from the alkali-ion conductive solid electrolyte precursor, which may make it difficult to obtain an alkali-ion conductive solid electrolyte having a desired composition. As a result, the sintered body electrode 3 tends to have a large internal resistance and thus decrease the charge/discharge efficiency. Next, the laminate of the solid electrolyte layer 2 and the sintered body electrode 3 is peeled off from the base material 27 as shown in Fig. 10(b) and a current collector 4 is formed on the sintered body electrode 3. Alternatively, after the current collector 4 is formed on the sintered body electrode 3, the laminate of the solid electrolyte layer 2 and the sintered body electrode 3 may be peeled off from the base material 27. In the manner as thus far described, a battery member 1 can be obtained.

In this embodiment, since the solid electrolyte layer 2 and the sintered body electrode 3 are concurrently obtained, the productivity can be increased. In addition, since the paste 22 is used for the production of the solid electrolyte layer 2, the solid electrolyte layer 2 can be easily reduced in thickness. Modifications of this embodiment will be described below.

### (Modification 1 of Fourth Embodiment)

Figs. 11(a) to 11(c) are schematic cross-sectional views for illustrating a method for manufacturing a battery member according to Modification 1 of the fourth embodiment. In this modification, as shown in Fig. 11(a), the paste 22 is applied on the powder compact 23A. Next, in the same manner as in the fourth embodiment, the laminate of the paste 22 and the powder compact 23A is fired, in an N₂ atmosphere, at over 500°C and not higher than 1300°C (preferably, over 800°C and not higher than 1150°C). Thus, as shown in Fig. 11(b), a solid electrolyte layer 2 and a sintered body electrode 3 are concurrently obtained. If the firing temperature is too low, the reaction is insufficient, which makes it difficult to obtain a desired sintered body electrode 3. Furthermore, a desired solid electrolyte layer 2 is difficult to obtain. In addition, the bondability between the sintered body electrode 3 and the solid electrolyte layer 2 may be insufficient. As a result, the sintered body electrode 3 tends to have a large internal resistance and thus decrease the charge/discharge efficiency. On the other hand, if the firing temperature is too high, the alkaline component evaporates from the alkali-ion conductive solid electrolyte precursor, which may make it difficult to obtain an alkali-ion conductive solid electrolyte having a desired composition. As a result, the sintered body electrode 3 tends to have a large internal resistance and thus decrease the charge/discharge efficiency. Next, as shown in Fig. 11(c), a current collector 4 is formed on the sintered body electrode 3. In the manner as thus far described, a battery member 21 can be obtained.

In the battery member 1 produced in the fourth embodiment, as shown in Fig. 1, the outer peripheral edge of the solid electrolyte layer 2 is located laterally to the outer peripheral edge of the sintered body electrode 3 in plan view. The plan view herein refers to the direction of view from above in Fig. 1. On the other hand, in this modification, as shown in Fig. 11(a), the paste 22 is applied on the powder compact 23A. Therefore, in the battery member 21 shown in Fig. 11(c), the outer peripheral edge of the solid electrolyte layer 2 is coincident with the outer peripheral edge of the sintered body electrode 3 in plan view.

### (Modification 2 of Fourth Embodiment)

Figs. 12(a) to 12(c) are schematic cross-sectional views for illustrating a method for manufacturing a battery member according to Modification 2 of the fourth embodiment. In this modification, a powder compact 22A shown in Fig. 12(a) is prepared instead of the paste 22 shown in Fig. 10(a). The powder compact 22A is a solid electrolyte forming material layer defined in the present invention. The powder compact 22A can be obtained by pressing mixed raw material powders into a shape. Next, a powder compact 23A serving as an electrode forming material layer is layered on the powder compact 22A serving as the solid electrolyte forming material layer. Next, in the same manner as in the fourth embodiment, the laminate of the powder compact 22A and the powder compact 23A is fired, in an N₂ atmosphere, at over 500°C and not higher than 1300°C (preferably, over 800°C and not higher than 1150°C). Thus, as shown in Fig. 12(b), a solid electrolyte layer 2 and a sintered body electrode 3 are concurrently obtained. If the firing temperature is too low, the reaction is insufficient, which makes it difficult to obtain a desired sintered body electrode 3. Furthermore, a desired solid electrolyte layer 2 is difficult to obtain. In addition, the bondability between the sintered body electrode 3 and the solid electrolyte layer 2 may be insufficient. As a result, the sintered body electrode 3 tends to have a large internal resistance and thus decrease the charge/discharge efficiency. On the other hand, if the firing temperature is too high, the alkaline component evaporates from the alkali-ion conductive solid electrolyte precursor, which may make it difficult to obtain an alkali-ion conductive solid electrolyte having a desired composition. As a result, the sintered body electrode 3 tends to have a large internal resistance and thus decrease the charge/discharge efficiency. Next, as shown in Fig. 12(c), a current collector 4 is formed on the sintered body electrode 3. In the manner as thus far described, a battery member 21 can be obtained.

### (Fifth Embodiment)

Figs. 13(a) and 13(b) are schematic cross-sectional views for illustrating a method for manufacturing a battery member according to the fifth embodiment. First, a powder compact 23B and a paste 22 both shown in Fig. 13(a) are prepared. The powder compact 23B is an electrode forming material layer defined in the present invention.

In obtaining the powder compact 23B, a mixture powder of an alkali-ion conductive solid electrolyte precursor and a carbon electrode material precursor is obtained in the same manner as in the manufacturing method according to the first embodiment. Next, the mixture powder is fired in an N₂ atmosphere at not lower than 200°C and not higher than 800°C. Alternatively, the upper limit of the temperature may not be higher than 500°C in consideration of the firing temperature during a second firing step to be described hereinafter. This step is the same first firing step as in the second embodiment. Specifically, in this step, a mixture powder of the alkali-ion conductive solid electrolyte precursor and a carbon electrode material is obtained. If the firing temperature is too low, the carbon electrode material precursor is less likely to change into a carbon electrode material. On the other hand, if the firing temperature is too high, the alkali-ion conductive solid electrolyte precursor tends to change into an alkali-ion conductive solid electrolyte. Next, the mixture powder and the conductive agent 6 are mixed and the mixture is then pressed into a shape, thus obtaining a powder compact 23B.

On the other hand, as shown in Fig. 13(a), the paste 22 serving as a solid electrolyte forming material layer is applied on an appropriate base material 27. Next, the powder compact 23B is layered on the paste 22. Next, the laminate of the paste 22 and the powder compact 23B is fired, in an N₂ atmosphere, at over 500°C and not higher than 1300°C (preferably, over 800°C and not higher than 1150°C). This step is the same second firing step as in the second embodiment. Thus, as shown in Fig. 13(b), a solid electrolyte layer 2 and a sintered body electrode 3 are concurrently obtained. In this manner, a laminate of the solid electrolyte layer 2 and the sintered body electrode 3 is obtained. If the firing temperature is too low, the reaction is insufficient, which makes it difficult to obtain a desired sintered body electrode 3. Furthermore, a desired solid electrolyte layer 2 is difficult to obtain. In addition, the bondability between the sintered body electrode 3 and the solid electrolyte layer 2 may be insufficient. As a result, the sintered body electrode 3 tends to have a large internal resistance and thus decrease the charge/discharge efficiency. On the other hand, if the firing temperature is too high, the alkaline component evaporates from the alkali-ion conductive solid electrolyte precursor, which may make it difficult to obtain an alkali-ion conductive solid electrolyte having a desired composition. As a result, the sintered body electrode 3 tends to have a large internal resistance and thus decrease the charge/discharge efficiency. Next, the laminate of the solid electrolyte layer 2 and the sintered body electrode 3 is peeled off from the base material 27 and a current collector 4 is then formed on the sintered body electrode 3. In the manner as thus far described, a battery member 1 can be obtained. In this embodiment, since the solid electrolyte layer 2 is obtained concurrently with the sintered body electrode 3, the productivity can be increased. In addition, like the second embodiment, the thickness of the sintered body electrode 3 can be easily controlled. Furthermore, the thickness of the sintered body electrode 3 can be easily increased and, therefore, the capacity can be easily increased.

### (Sixth Embodiment)

Figs. 14(a) and 14(b) are schematic cross-sectional views for illustrating a method for manufacturing a battery member according to the sixth embodiment. First, a powder compact 23C and a paste 22 of a solid electrolyte, both shown in Fig. 14(a), are prepared. The powder compact 23C is an electrode forming material layer defined in the present invention.

In obtaining the powder compact 23C, a mixture powder of an alkali-ion conductive solid electrolyte precursor and a carbon electrode material precursor is obtained in the same manner as in the manufacturing method according to the first embodiment. Next, the mixture powder is fired, in an N₂ atmosphere, at over 500°C and not higher than 1150°C (preferably, over 800°C and not higher than 1100°C). Thus, an alkali-ion conductive solid electrolyte and a carbon electrode material are concurrently obtained. This step is the same third firing step as in the third embodiment. By the third firing step, a mixture powder of the alkali-ion conductive solid electrolyte and the carbon electrode material is obtained. If the firing temperature is too low, the mixture powder of the alkali-ion conductive solid electrolyte and the carbon electrode material is difficult to obtain. On the other hand, if the firing temperature is too high, the alkaline component evaporates from the alkali-ion conductive solid electrolyte precursor, which may make it difficult to obtain an alkali-ion conductive solid electrolyte having a desired composition. Next, the mixture powder and the conductive agent 6 are mixed and the mixture is then pressed into a shape, thus obtaining a powder compact 23C.

On the other hand, as shown in Fig. 14(a), the paste 22 serving as a solid electrolyte forming material layer is applied on an appropriate base material 27. Next, the powder compact 23C is layered on the paste 22. Next, the laminate of the paste 22 and the powder compact 23C is fired, in an N₂ atmosphere, at not lower than 600°C and not higher than 1300°C (preferably, over 800°C and not higher than 1250°C). This step is the same fourth firing step as in the third embodiment. By the fourth firing step, as shown in Fig. 14(b), a solid electrolyte layer 2 and a sintered body electrode 3 are concurrently obtained. In this manner, a laminate of the solid electrolyte layer 2 and the sintered body electrode 3 is obtained. If the firing temperature is too low, the sinterability of the sintered body electrode 3 and the bondability between the sintered body electrode 3 and the solid electrolyte layer 2 may be insufficient. As a result, the sintered body electrode 3 tends to have a large internal resistance and thus decrease the charge/discharge efficiency. On the other hand, if the firing temperature is too high, the alkaline component evaporates from the alkali-ion conductive solid electrolyte precursor, which may make it difficult to obtain an alkali-ion conductive solid electrolyte having a desired composition. As a result, the sintered body electrode 3 tends to have a large internal resistance and thus decrease the charge/discharge efficiency. Next, the laminate of the solid electrolyte layer 2 and the sintered body electrode 3 is peeled off from the base material 27 and a current collector 4 is then formed on the sintered body electrode 3. In the manner as thus far described, a battery member 1 can be obtained.

In this embodiment, since the solid electrolyte layer 2 and the sintered body electrode 3 are concurrently obtained, the productivity can be increased. In addition, like the third embodiment, the thickness of the sintered body electrode 3 can be more easily controlled. Furthermore, the thickness of the sintered body electrode 3 can be more easily increased and, therefore, the capacity can be more easily increased.

Meanwhile, the sintered body electrode 3 according to the one embodiment of the present invention can be used independently. Examples of a method for manufacturing the sintered body electrode 3 will be described below.

### (Seventh Embodiment)

Figs. 15(a) and 15(b) are schematic cross-sectional views for illustrating a method for manufacturing a sintered body electrode according to the seventh embodiment. First, as shown in Fig. 15(a), a powder compact 23A is prepared in the same manner as in the fourth embodiment. The powder compact 23A is an electrode forming material layer containing an alkali-ion conductive solid electrolyte precursor, a carbon electrode material precursor, and a conductive agent 6. However, the electrode forming material layer need not necessarily contain the conductive agent 6. Next, the powder compact 23A is fired, in an N₂ atmosphere, at over 500°C and not higher than 1300°C (preferably, over 800°C and not higher than 1150°C). Thus, an alkali-ion conductive solid electrolyte and a carbon electrode material are concurrently obtained and, as a result, a mixture phase 5 of the alkali-ion conductive solid electrolyte and the carbon electrode material is obtained. In this manner, a sintered body electrode 3 can be obtained as shown in Fig. 15(b). If the firing temperature is too low, the reaction is insufficient, which makes it difficult to obtain a desired sintered body electrode 3. As a result, the sintered body electrode 3 tends to have a large internal resistance and thus decrease the charge/discharge efficiency. On the other hand, if the firing temperature is too high, the alkaline component evaporates from the alkali-ion conductive solid electrolyte precursor, which may make it difficult to obtain an alkali-ion conductive solid electrolyte having a desired composition. As a result, the sintered body electrode 3 tends to have a large internal resistance and thus decrease the charge/discharge efficiency.

### (Eighth Embodiment)

Figs. 16(a) and 16(b) are schematic cross-sectional views for illustrating a method for manufacturing a sintered body electrode according to the eighth embodiment. First, as shown in Fig. 16(a), a powder compact 23B is prepared in the same manner as in the fifth embodiment. Specifically, a mixture powder of an alkali-ion conductive solid electrolyte precursor and a carbon electrode material precursor is fired in an N₂ atmosphere at not lower than 200°C and not higher than 800°C. Alternatively, the upper limit of the temperature may not be higher than 500°C in consideration of the firing temperature during a second firing step to be described hereinafter. Thus, a carbon electrode material is obtained from the carbon electrode material precursor. This step is the same first firing step as in the fifth embodiment. By the first firing step, a mixture powder of the alkali-ion conductive solid electrolyte precursor and the carbon electrode material is obtained. If the firing temperature is too low, the carbon electrode material precursor is less likely to change into a carbon electrode material. On the other hand, if the firing temperature is too high, the alkali-ion conductive solid electrolyte precursor tends to change into an alkali-ion conductive solid electrolyte. Next, the mixture powder and a conductive agent 6 are mixed and the mixture is then pressed into a shape, thus obtaining a powder compact 23B.

Next, the powder compact 23B is fired, in an N₂ atmosphere, at over 500°C and not higher than 1300°C (preferably, over 800°C and not higher than 1150°C). Thus, an alkali-ion conductive solid electrolyte is obtained from the alkali-ion conductive solid electrolyte precursor and, as a result, a mixture phase 5 of the alkali-ion conductive solid electrolyte and the carbon electrode material is obtained. This step is the same second firing step as in the fifth embodiment. In the second firing step, firing is performed at a higher temperature than in the first firing step. In this manner, a sintered body electrode 3 is obtained as shown in Fig. 16(b). If the firing temperature is too low, the reaction is insufficient, which makes it difficult to obtain a desired sintered body electrode 3. As a result, the sintered body electrode 3 tends to have a large internal resistance and thus decrease the charge/discharge efficiency. On the other hand, if the firing temperature is too high, the alkaline component evaporates from the alkali-ion conductive solid electrolyte precursor, which may make it difficult to obtain an alkali-ion conductive solid electrolyte having a desired composition. As a result, the sintered body electrode 3 tends to have a large internal resistance and thus decrease the charge/discharge efficiency.

### (Ninth Embodiment)

Figs. 17(a) and 17(b) are schematic cross-sectional views for illustrating a method for manufacturing a sintered body electrode according to the ninth embodiment. First, as shown in Fig. 17(a), a powder compact 23C is prepared in the same manner as in the sixth embodiment. Specifically, a mixture powder of an alkali-ion conductive solid electrolyte precursor and a carbon electrode material precursor is fired in an N₂ atmosphere at over 500°C and not higher than 1150°C (preferably, over 800°C and not higher than 1100°C). Thus, an alkali-ion conductive solid electrolyte and a carbon electrode material are concurrently obtained. This step is the same third firing step as in the sixth embodiment. By the third firing step, a mixture powder of the alkali-ion conductive solid electrolyte and the carbon electrode material is obtained. If the firing temperature is too low, the mixture powder of the alkali-ion conductive solid electrolyte and the carbon electrode material is difficult to obtain. On the other hand, if the firing temperature is too high, the alkaline component evaporates from the alkali-ion conductive solid electrolyte precursor, which may make it difficult to obtain an alkali-ion conductive solid electrolyte having a desired composition. Next, the mixture powder and a conductive agent 6 are mixed and the mixture is then pressed into a shape, thus obtaining a powder compact 23C.

Next, the powder compact 23C is fired, in an N₂ atmosphere, at not lower than 600°C and not higher than 1300°C (preferably, not lower than 900°C and not higher than 1250°C). This step is the same fourth firing step as in the sixth embodiment. In the fourth firing step, firing is performed at a higher temperature than in the third firing step. In this manner, a sintered body electrode 3 is obtained as shown in Fig. 17(b). If the firing temperature is too low, the sinterability of the sintered body electrode 3 may be insufficient. As a result, the sintered body electrode 3 tends to have a large internal resistance and thus decrease the charge/discharge efficiency. On the other hand, if the firing temperature is too high, the alkaline component evaporates from the alkali-ion conductive solid electrolyte precursor, which may make it difficult to obtain an alkali-ion conductive solid electrolyte having a desired composition. As a result, the sintered body electrode 3 tends to have a large internal resistance and thus decrease the charge/discharge efficiency.

### [Battery Member]

### (Second Embodiment)

Fig. 18 is a schematic cross-sectional view showing a battery member according to a second embodiment. This embodiment is different from the first embodiment in terms of the structure of a sintered body electrode 33 and the absence of a current collector. For the rest, a battery member 31 according to this embodiment has the same structure as the battery member 1 according to the first embodiment. However, the battery member 31 may include a current collector.

The sintered body electrode 33 includes a particulate carbon electrode material 38 and a coating layer 39. The D50 of the particulate carbon electrode material 38 is 1 µm. The particulate carbon electrode material 38 is made of graphite or hard carbon. In the particulate carbon electrode material 38, the D50 is preferably 50 µm or less and more preferably 10 µm or less. Thus, the denseness of the sintered body electrode 33 can be increased. The lower limit of the D50 of the particular carbon electrode material 38 is not particularly limited, but is, for example, 10 nm, 0.1 µm, 0.3 µm, 0.5 µm or 0.6 µm.

As shown in Fig. 18, the particulate carbon electrode material 38 is coated with a coating layer 39. The coating layer 39 is made of an alkali-ion conductive solid electrolyte. The alkali-ion conductive solid electrolyte has a sodium-ion conductivity in this embodiment. Alternatively, the alkali-ion conductive solid electrolyte may have a lithium-ion conductivity. The particles of the particulate carbon electrode material 38 are bonded together through the coating layer 39. Furthermore, the sintered body electrode 33 is bonded to the solid electrolyte layer 2 by the coating layer 39.

The sintered body electrode 33 preferably contains a conductive agent 6. When the sintered body electrode 33 contains the conductive agent 6, conductive paths are formed inside, which enables reduction of the internal resistance of the sintered body electrode 33. However, the sintered body electrode 33 need not necessary contain the conductive agent 6. The sintered body electrode 33 contains no binder.

The battery member 31 according to this embodiment, like the battery member 1 according to the first embodiment, can increase the safety and also can increase the thermal resistance and voltage resistance. In addition, in the battery member 31 according to this embodiment, the sintered body electrode 33 can be easily increased in thickness (increased in the amount thereof supported) by appropriately controlling the amount of the particulate carbon electrode material 38. Furthermore, the performance can be easily controlled by selecting the type of the particulate carbon electrode material 38 used. The sintered body electrode 33 according to the one embodiment of the present invention may be used independently.

Hereinafter, a description will be given of examples of a method for manufacturing the battery member 31 according to this embodiment and an example of a method for manufacturing the sintered body electrode 33.

### [Manufacturing Method]

A description will be given below of respective battery member manufacturing methods or sintered body electrode manufacturing method according to tenth to twelfth embodiments of the present invention.

### (Tenth Embodiment)

Figs. 19(a) and 19(b) are schematic cross-sectional views for illustrating a method for manufacturing a battery member according to the tenth embodiment. First, a paste 43 and a solid electrolyte layer 2 both shown in Fig. 19(a) are prepared. The paste 43 is an electrode forming material layer defined in the present invention.

In obtaining the paste 43, an alkali-ion conductive solid electrolyte precursor of the same type as in the manufacturing method according to the first embodiment is prepared. In addition, a particulate carbon electrode material 38 is prepared. Next, the alkali-ion conductive solid electrolyte precursor and the particulate carbon electrode material 38 are mixed and the mixture is then dried. Thus, a mixture powder of the alkali-ion conductive solid electrolyte precursor and the particulate carbon electrode material 38 is obtained. Next, the mixture powder is added into an organic solvent and the mixture is further mixed with a conductive agent 6 and a binder. As the organic solvent, for example, N-methylpyrrolidone can be used. Thus, a paste 43 is obtained. However, the conductive agent 6 need not necessarily be added.

Next, as shown in Fig. 19(a), the paste 43 is applied on the first principal surface 2a of the solid electrolyte layer 2. In this manner, a layering step of layering the solid electrolyte layer 2 and the paste 43 as the electrode forming material layer is performed. Next, the laminate of the solid electrolyte layer 2 and the paste 43 is fired, in an N₂ atmosphere, at over 500°C and not higher than 1300°C (preferably, over 800°C and not higher than 1150°C). Thus, as shown in Fig. 19(b), an alkali-ion conductive solid electrolyte is obtained from the alkali-ion conductive solid electrolyte precursor and, as a result, a coating layer 39 made of the alkali-ion conductive solid electrolyte is obtained. During the time, the particles of the particulate carbon electrode material 38 are bonded together through the coating layer 39, thus obtaining a sintered body electrode 33. In addition, a laminate of the sintered body electrode 33 and the solid electrolyte layer 2 is obtained. Concurrently, the sintered body electrode 33 is bonded to the solid electrolyte layer 2 by the coating layer 39. In the manner as thus far described, a battery member 31 is obtained. If the firing temperature is too low, the reaction is insufficient, which makes it difficult to obtain a desired sintered body electrode 33. As a result, the sintered body electrode 33 tends to have a large internal resistance and thus decrease the charge/discharge efficiency. In addition, the bondability between the sintered body electrode 33 and the solid electrolyte layer 2 may be insufficient. On the other hand, if the firing temperature is too high, the alkaline component evaporates from the alkali-ion conductive solid electrolyte precursor, which may make it difficult to obtain a coating layer 39 made of an alkali-ion conductive solid electrolyte having a desired composition. As a result, the sintered body electrode 33 tends to have a large internal resistance and thus decrease the charge/discharge efficiency.

### (Eleventh Embodiment)

Figs. 20(a) and 20(b) are schematic cross-sectional views for illustrating a method for manufacturing a battery member according to the eleventh embodiment. First, a powder compact 53 and a paste 22 both shown in Fig. 20(a) are prepared. The powder compact 53 is an electrode forming material layer defined in the present invention. The paste 22 is a solid electrolyte forming material layer defined in the present invention.

In obtaining the powder compact 53, a mixture powder of an alkali-ion conductive solid electrolyte precursor and a particulate carbon electrode material 38 is obtained in the same manner as in the manufacturing method according to the tenth embodiment. Next, the mixture powder and a conductive agent 6 are mixed and the mixture is then pressed into a shape, thus obtaining a powder compact 53.

On the other hand, the paste 22 can be obtained by adding mixed raw material powders into an organic solvent. Next, as shown in Fig. 20(a), the paste 22 is applied on an appropriate base material 27. Next, a layering step of layering the powder compact 53 serving as the electrode forming material layer on the paste 22 serving as the solid electrolyte forming material layer is performed. Next, the laminate of the paste 22 and the powder compact 53 is fired, in an N₂ atmosphere, at over 500°C and not higher than 1300°C (preferably, over 800°C and not higher than 1150°C). Thus, as shown in Fig. 20(b), a solid electrolyte layer 2 and a sintered body electrode 33 are concurrently obtained. In this manner, a laminate of the sintered body electrode 33 and the solid electrolyte layer 2 is obtained. If the firing temperature is too low, the reaction is insufficient, which makes it difficult to obtain a desired sintered body electrode 33. As a result, the sintered body electrode 33 tends to have a large internal resistance and thus decrease the charge/discharge efficiency. Furthermore, a desired solid electrolyte layer 2 is difficult to obtain. In addition, the bondability between the sintered body electrode 33 and the solid electrolyte layer 2 may be insufficient. On the other hand, if the firing temperature is too high, the alkaline component evaporates from the alkali-ion conductive solid electrolyte precursor, which may make it difficult to obtain a coating layer 39 made of an alkali-ion conductive solid electrolyte having a desired composition and the solid electrolyte layer 2. As a result, the sintered body electrode 33 tends to have a large internal resistance and thus decrease the charge/discharge efficiency.

Alternatively, the paste 22 may be applied to the powder compact 53, like the example shown in Fig. 11(a). Still alternatively, a powder compact 22A of the same type as in the example shown in Fig. 12(a) may be prepared instead of the paste 22. In this case, firing can be performed after the powder compact 53 serving as the electrode forming material layer and the powder compact 22A serving as the solid electrolyte forming material layer are layered.

### (Twelfth Embodiment)

Figs. 21(a) and 21(b) are schematic cross-sectional views for illustrating a method for manufacturing a sintered body electrode according to the twelfth embodiment. First, as shown in Fig. 21(a), a powder compact 53 is prepared in the same manner as in the eleventh embodiment. The powder compact 53 is an electrode forming material layer defined in the present invention. Next, the powder compact 53 is fired, in an N₂ atmosphere, at over 500°C and not higher than 1300°C (preferably, over 800°C and not higher than 1150°C). In this manner, a sintered body electrode 33 is obtained as shown in Fig. 21(b). If the firing temperature is too low, the reaction is insufficient, which makes it difficult to obtain a desired sintered body electrode 33. As a result, the sintered body electrode 33 tends to have a large internal resistance and thus decrease the charge/discharge efficiency. On the other hand, if the firing temperature is too high, the alkaline component evaporates from the alkali-ion conductive solid electrolyte precursor, which may make it difficult to obtain a coating layer 39 made of an alkali-ion conductive solid electrolyte having a desired composition. As a result, the sintered body electrode 33 tends to have a large internal resistance and thus decrease the charge/discharge efficiency.

Alternatively, a sintered body electrode 33 may be obtained by applying a paste 43 serving as an electrode forming material layer and being of the same type as in the tenth embodiment shown in Fig. 19(a) on an appropriate base material and then firing them.

### [Battery Member]

### (Third Embodiment)

Fig. 22 is a schematic cross-sectional view showing a battery member according to a third embodiment. This embodiment is different from the second embodiment in terms of the structure of a coating layer 49 in a sintered body electrode 73. For the rest, a battery member 41 according to this embodiment has the same structure as the battery member 31 according to the second embodiment.

The coating layer 49 contains a carbon electrode material and an alkali-ion conductive solid electrolyte. The carbon electrode material is a material, separate from the particulate carbon electrode material 38, contained in the sintered body electrode 73 and is made of graphite or hard carbon. The alkali-ion conductive solid electrolyte has a sodium-ion conductivity in this embodiment. Alternatively, the alkali-ion conductive solid electrolyte may have a lithium-ion conductivity. The coating layer 49 contains a mixture phase of the carbon electrode material and the alkali-ion conductive solid electrolyte. The mixture phase is in particulate form. The particles in the mixture phase are bound together by sintering. The particles of the particulate carbon electrode material 38 are bonded together through the coating layer 49. Furthermore, the sintered body electrode 73 is bonded to the solid electrolyte layer 2 by the coating layer 49.

The battery member 41 according to this embodiment, like the battery member 1 according to the first embodiment, can increase the safety and also can increase the thermal resistance and voltage resistance. In addition, in the battery member 41 according to this embodiment, the sintered body electrode 73 can be easily increased in thickness (increased in the amount thereof supported) by appropriately controlling the amount of the particulate carbon electrode material 38. Furthermore, as shown in Example 3 to be described hereinafter, the battery member 41 according to this embodiment has a feature of an excellent first charge/discharge efficiency (irreversible capacity).

### [Manufacturing Method]

A description will be given below of a method for manufacturing a battery member according to a thirteenth embodiment of the present invention.

### (Thirteenth Embodiment)

Figs. 23(a) and 23(b) are schematic cross-sectional views for illustrating a method for manufacturing a battery member according to the thirteenth embodiment. First, a paste 83 and a solid electrolyte layer 2 are prepared. The paste 83 is an electrode forming material defined in the present invention.

In obtaining the paste 83, an alkali-ion conductive solid electrolyte precursor and a carbon electrode material precursor, both of which are of the same type as in the manufacturing method according to the first embodiment, are prepared. In addition, a particulate carbon electrode material 38 is prepared. Next, the alkali-ion conductive solid electrolyte precursor, the carbon electrode material precursor, and the particulate carbon electrode material 38 are mixed and the mixture is then dried. Thus, a mixture powder of the alkali-ion conductive solid electrolyte precursor, the carbon electrode material precursor, and the particulate carbon electrode material 38 is obtained. Next, the mixture powder is added into an organic solvent and the mixture is further mixed with a conductive agent 6 and a binder. As the organic solvent, for example, N-methylpyrrolidone can be used. Thus, a paste 83 is obtained. However, the conductive agent 6 need not necessarily be added.

Next, as shown in Fig. 23(a), the paste 83 is applied on the first principal surface 2a of the solid electrolyte layer 2. In this manner, a layering step of layering the solid electrolyte layer 2 and the paste 83 as the electrode forming material layer is performed. Next, the laminate of the solid electrolyte layer 2 and the paste 83 is fired, in an N₂ atmosphere, at over 500°C and not higher than 1300°C (preferably, over 800°C and not higher than 1150°C). Thus, the alkali-ion conductive solid electrolyte precursor and the carbon electrode material precursor form a mixture phase of a carbon electrode material and an alkali-ion conductive solid electrolyte and, concurrently, as shown in Fig. 23(b), a coating layer 49 made of the mixture phase is formed on the surface of the particulate carbon electrode material 38. During the time, the particles of the particulate carbon electrode material 38 are bonded together through the coating layer 49, thus obtaining a sintered body electrode 73. In addition, a laminate of the sintered body electrode 73 and the solid electrolyte layer 2 is obtained. Concurrently, the sintered body electrode 73 is bonded to the solid electrolyte layer 2 by the coating layer 49. In the manner as thus far described, a battery member 41 is obtained. If the firing temperature is too low, the reaction is insufficient, which makes it difficult to obtain a desired sintered body electrode 73. As a result, the sintered body electrode 73 tends to have a large internal resistance and thus decrease the charge/discharge efficiency. In addition, the bondability between the sintered body electrode 73 and the solid electrolyte layer 2 may be insufficient. On the other hand, if the firing temperature is too high, the alkaline component evaporates from the alkali-ion conductive solid electrolyte precursor, which may make it difficult to obtain a coating layer 49 containing an alkali-ion conductive solid electrolyte having a desired composition. As a result, the sintered body electrode 73 tends to have a large internal resistance and thus decrease the charge/discharge efficiency.

Alternatively, like the eleventh embodiment shown in Fig. 20, a battery member may be obtained by applying a paste serving as a solid electrolyte forming material layer on an appropriate base material, layering a powder compact serving as an electrode forming material layer on the top of the paste, and firing them. In this case, the powder compact can be obtained by mixing a conductive agent with the mixture powder of the alkali-ion conductive solid electrolyte precursor, the carbon electrode material precursor, and the particulate carbon electrode material and then pressing the mixture into a shape. Furthermore, like the twelfth embodiment shown in Fig. 21, the powder compact may be fired to thus obtain a sintered body electrode.

Working examples of the battery member according to the third embodiment will be described below.

### [Example 3]

Liquid glass (sodium silicate), zirconium ammonium carbonate aqueous solution, and sodium tripolyphosphate were weighed 25 g in total to provide NASICON crystals having a composition ratio of Na₃Zr₂Si₂PO₁₂. These materials were added to 150 g of pure water, followed by stirring with a hot stirrer at 50°C for 24 hours. Thus, an alkali-ion conductive solid electrolyte precursor solution was obtained. Next, this solution was allowed to stand overnight in a thermostat bath at approximately 5°C, thus turning it into a gel. In this manner, an alkali-ion conductive solid electrolyte precursor was prepared.

### <Production of Mixture of Alkali-Ion Conductive Solid Electrolyte Precursor and Carbon Electrode Material Precursor>

Sucrose being a carbon electrode material precursor and serving as a source of hard carbon and the alkali-ion conductive solid electrolyte precursor were mixed for an hour in a stirrer to give a weight ratio of 4:1, thus obtaining a mixture. Next, the mixture was dried for 12 hours in a thermostat bath at 60°C, then vacuum dried at 100°C for six hours, and then ground into powdered form in an agate mortar.

### <Production of Electrode Paste>

A powder of the mixture of the alkali-ion conductive solid electrolyte precursor and the carbon electrode material precursor, hard carbon powder (average particle diameter D₅₀ = 1 µm), and a conductive agent (acetylene black) were weighed to give a weight ratio of 57:40:3. A PPC (polypropylene carbonate) binder was added to these materials to have an external ratio of 15% by weight and all components were mixed in a N-methylpyrrolidone solvent with a planetary centrifugal mixer, thus obtaining an electrode paste.

### <Production of Battery Member>

A solid electrolyte layer of Na₃Zr₂Si₂PO₁₂ having a thickness of 500 µm was separately prepared. The electrode paste was applied to a thickness of 70 µm on the first principal surface of the solid electrolyte layer and dried in a drier at 50°C. After the drying, the electrode paste on the solid electrolyte layer was fired at 1000°C for two hours in a nitrogen atmosphere (N₂: 99.9999%), thus obtaining a sintered body electrode in which the hard carbon powder was coated with a coating layer. The coating layer was formed by precipitating a mixture phase of an alkali-ion conductive solid electrolyte having a composition of Na₃Zr₂Si₂PO₁₂ and a carbon electrode material made of hard carbon. Next, a current collector was formed on the sintered body electrode by sputtering. The current collector was formed of an aluminum thin film. In the manner as thus far described, a battery member was obtained. The sintered body electrode in this example is a negative electrode.

### <Production of Test Battery>

Metal sodium was attached as a counterelectrode to the second principal surface of the solid electrolyte layer in a glove box, thus producing a test battery.

### <Charge and Discharge Test>

The test battery underwent a charge and discharge test in a thermostat bath at 60°C. Specifically, the charge capacity and the discharge capacity of the test battery were measured by subjecting it to charging (insertion of sodium ions) at a cut-off voltage of 0.001 V and subjecting it to discharging (extraction of sodium ions) at a cut-off voltage of 2.5 V In doing so, in Example 3, charging and discharging were conducted by assuming (the weight of the produced negative electrode, i.e., the above-described sintered body electrode) × 300 mAh/g as an actual capacity and setting a current value to give a C-rate of 0.1. The results of the charge and discharge test are shown in Fig. 24.

As shown in Fig. 24, the charge capacity was 379 mAh/g, the discharge capacity was 293 mAh/g, and the first charge/discharge efficiency was 77.3%. Since the first charge/discharge efficiency at 60°C in Example 1 for the previously described battery member according to the first embodiment of the present invention was 68%, this shows that Example 3 for the battery member according to the third embodiment has a more excellent first charge/discharge efficiency.

The foregoing description has dealt with embodiments in which a carbon electrode material made of graphite or hard carbon is used as an active material. Although the carbon electrode material made of graphite or hard carbon is a material used mainly as a negative-electrode active material, the present invention can also be applied to the case where a positive-electrode active material is used instead of the carbon electrode material. For example, in the battery member according to the second embodiment of the present invention shown in Fig. 18 and the battery member manufacturing methods according to the tenth to twelfth embodiments of the present invention shown in Figs. 19 to 21, a positive-electrode active material can be used instead of the particulate carbon electrode material 38. By doing so, a sintered body electrode containing a positive-electrode active material and an alkali-ion conductive solid electrolyte can be obtained. Alternatively, a battery member including a solid electrolyte layer and the above sintered body electrode layered on the solid electrolyte layer can be obtained. The type of the positive-electrode active material is not particularly limited, but examples include crystals and crystallized glasses represented by a general formula NaₓM_{y}P₂O_{z} (where M represents at least one transition metal element selected from Fe, Cr, Mn, Co and Ni, 1.20 ≤ x ≤ 2.10, and 0.95 ≤ y ≤ 1.60).

### [Example 4]

### <Preparation of Alkali-Ion Conductive Solid Electrolyte Precursor>

Lithium acetate dihydrate CH₃COOLi·2H₂O, lanthanum acetate 1.5-hydrate La(CH₃COO)₃·1.5H₂O, and a zirconium (IV) propoxide solution Zr(OCH₂CH₂CH₃)₄ were weighed 25 g in total to provide crystals having a composition ratio of Li₇La₃Zr₂O₁₂. These materials were added to 150 g of pure water, followed by stirring with a hot stirrer at 50°C for 24 hours. Thus, an alkali-ion conductive solid electrolyte precursor solution was obtained. Next, this solution was allowed to stand overnight in a thermostat bath at approximately 5°C, thus turning it into a gel. In this manner, an alkali-ion conductive solid electrolyte precursor was prepared.

### <Production of Mixture of Alkali-Ion Conductive Solid Electrolyte Precursor and Carbon Electrode Material Precursor>

Using sucrose being a carbon electrode material precursor and serving as a source of hard carbon and the alkali-ion conductive solid electrolyte precursor obtained in the above manner, a mixture powder of the alkali-ion conductive solid electrolyte precursor and the carbon electrode material precursor was obtained in the same manner as in Example 1.

### <Production of Electrode Paste>

Using the obtained mixture powder of the alkali-ion conductive solid electrolyte precursor and the carbon electrode material precursor, an electrode paste was obtained in the same manner as in Example 1.

### <Production of Battery Member>

A solid electrolyte layer of Li₇La₃Zr₂O₁₂ having a thickness of 500 µm was separately prepared. The electrode paste was applied to a thickness of 70 µm on the first principal surface of the solid electrolyte layer and dried in a drier at 50°C, thus forming an electrode forming material layer. After the drying, the electrode forming material layer on the solid electrolyte layer was fired at 1000°C for two hours in a nitrogen atmosphere (N₂: 99.9999%) to precipitate a mixture phase of an alkali-ion conductive solid electrolyte having a composition of Li₇La₃Zr₂O₁₂ and a carbon electrode material made of hard carbon, thus obtaining a sintered body electrode. Next, a current collector was formed on the sintered body electrode by sputtering. The current collector was formed of a copper thin film. In the manner as thus far described, a battery member was obtained. The sintered body electrode in this example is a negative electrode.

### <Production of Test Battery>

Metal lithium was attached as a counterelectrode to the second principal surface of the solid electrolyte layer in a glove box, thus producing a test battery.

### <Charge and Discharge Test>

The test battery underwent a charge and discharge test in a thermostat bath at 60°C. Specifically, the charge capacity and the discharge capacity of the test battery were measured by subjecting it to charging (insertion of lithium ions) at a cut-off voltage of 0.001 V and subjecting it to discharging (extraction of lithium ions) at a cut-off voltage of 1.5 V In doing so, charging and discharging were conducted by assuming (the weight of the produced negative electrode, i.e., the above-described sintered body electrode) × 400 mAh/g as an actual capacity and setting a current value to give a C-rate of 0.1. As a result, the charge capacity was 419 mAh/g, the discharge capacity was 314 mAh/g, and the first charge/discharge efficiency was 74.9%.

### [Reference Signs List]

- 1: battery member
- 2: solid electrolyte layer
- 2a, 2b: first, second principal surface
- 3: sintered body electrode
- 4: current collector
- 5: mixture phase
- 6: conductive agent
- 13Ato 13C: paste
- 21: battery member
- 22: paste
- 22A: powder compact
- 23A to 23C: powder compact
- 27: base material
- 31: battery member
- 33: sintered body electrode
- 38: particulate carbon electrode material
- 39: coating layer
- 41: battery member
- 43: paste
- 49: coating layer
- 53: powder compact
- 73: sintered body electrode
- 83: paste

## Claims

1. A sintered body electrode containing:
a carbon electrode material made of graphite or hard carbon; and
an alkali-ion conductive solid electrolyte.

2. The sintered body electrode according to claim 1, wherein the alkali-ion conductive solid electrolyte has a sodium-ion conductivity.

3. The sintered body electrode according to claim 1 or 2, wherein the alkali-ion conductive solid electrolyte is made of an oxide.

4. The sintered body electrode according to any one of claims 1 to 3,
containing a mixture phase of the carbon electrode material and the alkali-ion conductive solid electrolyte,
wherein the mixture phase is formed of particles having an average particle diameter of 10 µm or less.

5. The sintered body electrode according to any one of claims 1 to 3, wherein
the carbon electrode material is a particulate carbon electrode material, and
the particulate carbon electrode material is coated with a coating layer made of the alkali-ion conductive solid electrolyte.

6. The sintered body electrode according to any one of claims 1 to 3, wherein
the carbon electrode material is a particulate carbon electrode material, and
the particulate carbon electrode material is coated with a coating layer made of: a carbon electrode material different from the particulate carbon electrode material; and the alkali-ion conductive solid electrolyte.

7. The sintered body electrode according to any one of claims 1 to 6, wherein the alkali-ion conductive solid electrolyte is NASICON crystals and contains at least one of: a first compound represented by a general formula Na₁₊ₓZr₂P₃₋ₓSiₓO₁₂ (0 ≤ x ≤ 3); and a second compound in which a part of the Zr in the first compound is substituted with at least one element selected from the group consisting of Ca, Mg, Ba, Sr, Al, Nb, Ta, In, Ga, and group III elements.

8. The sintered body electrode according to any one of claims 1 to 6, wherein the alkali-ion conductive solid electrolyte contains at least one type of crystals of β-alumina crystals and β"-alumina crystals.

9. The sintered body electrode according to any one of claims 1 to 6, wherein the alkali-ion conductive solid electrolyte contains a crystalline phase represented by a general formula Li₇La₃Zr₂O₁₂, Li₇La₃Zr₂₋ₓMₓO₁₂ (where M represents at least one selected from Nb, Ga, and Ta and 0 < x < 2) or Li₇₋₃ₓAlₓLa₃Zr₂O₁₂ (0 < x < 2.3).

10. The sintered body electrode according to any one of claims 1 to 9, containing at least one carbon-based conductive agent in an amount of 0% by weight to 20% by weight selected from carbon black, acetylene black, Ketjenblack, carbon nanotube, and a vapor-grown carbon fiber (VGCF) conductive agent.

11. The sintered body electrode according to any one of claims 1 to 10, being a negative electrode.

12. The sintered body electrode according to any one of claims 1 to 11, being capable of absorbing and releasing alkali ions at 30°C after being thermally treated in an inert atmosphere at 500°C.

13. The sintered body electrode according to any one of claims 1 to 12, being capable of being reversibly charged and discharged with a charge/discharge efficiency of 90% or more during charge and discharge at a cut-off voltage of 9 V to 0.001 V

14. A battery member comprising:
a solid electrolyte layer; and
the sintered body electrode according to any one of claims 1 to 13 layered on the solid electrolyte layer.

15. The battery member according to claim 14, wherein the solid electrolyte layer has a thickness of 5 nm to 1 mm.

16. A battery comprising the battery member according to claim 14 or 15.

17. A method for manufacturing a sintered body electrode, comprising:
a mixing step of mixing an alkali-ion conductive solid electrolyte precursor and a carbon electrode material precursor to obtain a mixture of the alkali-ion conductive solid electrolyte precursor and the carbon electrode material precursor, the carbon electrode material precursor being a precursor of a carbon electrode material made of graphite or hard carbon;
the step of, after the mixing step, forming an electrode forming material layer containing the mixture; and
the step of firing the electrode forming material layer.

18. The method for manufacturing a sintered body electrode according to claim 17, wherein
the electrode forming material layer is made of a paste or a powder compact each containing the alkali-ion conductive solid electrolyte precursor and the carbon electrode material precursor, and
in the step of firing the electrode forming material layer, an alkali-ion conductive solid electrolyte and the carbon electrode material are concurrently obtained.

19. The method for manufacturing a sintered body electrode according to claim 17, wherein
in the step of forming an electrode forming material layer, a first firing step of firing the mixture to obtain a carbon electrode material is performed and the electrode forming material layer made of a paste or a powder compact each containing the alkali-ion conductive solid electrolyte precursor and the carbon electrode material is then formed, and
in the step of firing the electrode forming material layer, an alkali-ion conductive solid electrolyte is obtained from the alkali-ion conductive solid electrolyte precursor.

20. The method for manufacturing a sintered body electrode according to claim 17,
further comprising a third firing step of, after the mixing step, firing the mixture to concurrently obtain an alkali-ion conductive solid electrolyte and a carbon electrode material,
wherein, in the step of forming an electrode forming material layer, the electrode forming material layer made of a paste or a powder compact each containing the alkali-ion conductive solid electrolyte and the carbon electrode material is formed.

21. A method for manufacturing a sintered body electrode comprising:
a mixing step of mixing an alkali-ion conductive solid electrolyte precursor and a particulate carbon electrode material made of graphite or hard carbon to obtain a mixture of the alkali-ion conductive solid electrolyte precursor and the particulate carbon electrode material;
the step of, after the mixing step, forming an electrode forming material layer made of a paste or a powder compact each containing the alkali-ion conductive solid electrolyte precursor and the particulate carbon electrode material; and
the step of firing the electrode forming material layer to obtain an alkali-ion conductive solid electrolyte from the alkali-ion conductive solid electrolyte precursor and thus obtain the particulate carbon electrode material coated with a coating layer made of the alkali-ion conductive solid electrolyte.

22. A method for manufacturing a sintered body electrode comprising:
a mixing step of mixing an alkali-ion conductive solid electrolyte precursor, a carbon electrode material precursor, and a particulate carbon electrode material made of graphite or hard carbon to obtain a mixture of the alkali-ion conductive solid electrolyte precursor, the carbon electrode material precursor, and the particulate carbon electrode material, the carbon electrode material precursor being a precursor of a carbon electrode material made of graphite or hard carbon;
the step of, after the mixing step, forming an electrode forming material layer made of a paste or a powder compact each containing the mixture; and
the step of firing the electrode forming material layer to obtain an alkali-ion conductive solid electrolyte and a carbon electrode material from the alkali-ion conductive solid electrolyte precursor and the carbon electrode material precursor, respectively, and thus obtain the particulate carbon electrode material coated with a coating layer made of the alkali-ion conductive solid electrolyte and the carbon electrode material.

23. A method for manufacturing a battery member including a laminate of a sintered body electrode and a solid electrolyte layer, the method comprising:
a mixing step of mixing an alkali-ion conductive solid electrolyte precursor and a carbon electrode material precursor to obtain a mixture of the alkali-ion conductive solid electrolyte precursor and the carbon electrode material precursor, the carbon electrode material precursor being a precursor of a carbon electrode material made of graphite or hard carbon;
the step of, after the mixing step, forming an electrode forming material layer containing the mixture;
the step of obtaining a sintered body electrode by firing the electrode forming material layer; and
the step of obtaining a laminate of the sintered body electrode and a solid electrolyte layer.

24. The method for manufacturing a battery member according to claim 23, wherein
the electrode forming material layer is made of a paste or a powder compact each containing the alkali-ion conductive solid electrolyte precursor and the carbon electrode material precursor, and
the electrode forming material layer is fired to concurrently obtain an alkali-ion conductive solid electrolyte and a carbon electrode material.

25. The method for manufacturing a battery member according to claim 23, wherein
in the step of forming an electrode forming material layer, a first firing step of firing the mixture to obtain a carbon electrode material is performed and the electrode forming material layer made of a paste or a powder compact each containing the alkali-ion conductive solid electrolyte precursor and the carbon electrode material is formed, and
the step of obtaining a sintered body electrode is a second firing step of firing the electrode forming material layer to obtain an alkali-ion conductive solid electrolyte.

26. The method for manufacturing a battery member according to claim 23, further comprising, after the mixing step, a third firing step of firing the mixture to concurrently obtain an alkali-ion conductive solid electrolyte and a carbon electrode material,
wherein, in the step of forming an electrode forming material layer, the electrode forming material layer made of a paste or a powder compact each containing the alkali-ion conductive solid electrolyte and the carbon electrode material is formed, and
the step of obtaining a sintered body electrode is a fourth firing step of firing the electrode forming material layer.

27. A method for manufacturing a battery member including a laminate of a sintered body electrode and a solid electrolyte layer, the method comprising:
a mixing step of mixing an alkali-ion conductive solid electrolyte precursor and a particulate carbon electrode material made of graphite or hard carbon to obtain a mixture of the alkali-ion conductive solid electrolyte precursor and the particulate carbon electrode material;
the step of, after the mixing step, forming an electrode forming material layer made of a paste or a powder compact each containing the alkali-ion conductive solid electrolyte precursor and the particulate carbon electrode material;
the step of obtaining a sintered body electrode by firing the electrode forming material layer to obtain an alkali-ion conductive solid electrolyte from the alkali-ion conductive solid electrolyte precursor and obtain the particulate carbon electrode material coated with a coating layer made of the alkali-ion conductive solid electrolyte; and
the step of obtaining a laminate of the sintered body electrode and a solid electrolyte layer.

28. The method for manufacturing a battery member according to any one of claims 23 to 27,
further comprising a layering step of layering the solid electrolyte layer and the electrode forming material layer,
wherein the step of obtaining a sintered body electrode is performed after the layering step.

29. The method for manufacturing a battery member according to any one of claims 23 to 27,
further comprising a layering step of layering a solid electrolyte forming material layer made of a paste or a powder compact each containing a solid electrolyte precursor and the electrode forming material layer,
wherein, after the layering step, the electrode forming material layer and the solid electrolyte forming material layer are fired to concurrently obtain the sintered body electrode and the solid electrolyte layer.

30. An alkali-ion conductive solid electrolyte precursor solution containing an alkali metal element, a transition metal element, and carbonate ions.

31. The alkali-ion conductive solid electrolyte precursor solution according to claim 30, wherein the carbonate ions are coordinated to the transition metal element.

32. The alkali-ion conductive solid electrolyte precursor solution according to claim 30 or 31, wherein the transition metal element is at least one selected from the group consisting of group III elements and group IV elements.

33. The alkali-ion conductive solid electrolyte precursor solution according to any one of claims 30 to 32, having a pH of 7 or more.

34. The alkali-ion conductive solid electrolyte precursor solution according to any one of claims 30 to 33, containing NR₄⁺ (where Rs are each independently a substituent of at least one selected from the group consisting of H, CH₃, C₂H₅, and CHzCHzOH) as counterions to the carbonate ions.

35. The alkali-ion conductive solid electrolyte precursor solution according to any one of claims 30 to 34, being a precursor solution of a solid electrolyte made of NASICON crystals.

36. The alkali-ion conductive solid electrolyte precursor solution according to any one of claims 30 to 35, being a precursor solution of a sodium-ion conductive solid electrolyte.

37. An alkali-ion conductive solid electrolyte precursor being made of a gelled product or dried product of the alkali-ion conductive solid electrolyte precursor solution according to any one of claims 30 to 36.

38. An alkali-ion conductive solid electrolyte being made of a sintered body of the alkali-ion conductive solid electrolyte precursor according to claim 37.
